(19) Europäisches Patentamt
European Patent Office
Office européen des brevets

(11) **EP 4 080 379 A1**

(12) **EUROPEAN PATENT APPLICATION**
published in accordance with Art. 153(4) EPC

(43) Date of publication:
**26.10.2022 Bulletin 2022/43**

(21) Application number: **19956466.7**

(22) Date of filing: **19.12.2019**

(51) International Patent Classification (IPC):
**G06F 16/31** (2019.01)       **G06F 16/383** (2019.01)
**G06F 16/901** (2019.01)       **G06F 16/908** (2019.01)

(52) Cooperative Patent Classification (CPC):
**G06F 16/31; G06F 16/383; G06F 16/901;
G06F 16/908**

(86) International application number:
**PCT/JP2019/049967**

(87) International publication number:
**WO 2021/124535 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED
Kawasaki-shi, Kanagawa 211-8588 (JP)**

(72) Inventors:
• **KATAOKA, Masahiro
  Kawasaki-shi, Kanagawa 211-8588 (JP)**
• **OHYAMA, Shogo
  Kawasaki-shi, Kanagawa 211-8588 (JP)**
• **ONOUE, Satoshi
  Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **INFORMATION PROCESSING PROGRAM, INFORMATION PROCESSING METHOD, AND INFORMATION PROCESSING DEVICE**

(57)     An information processing apparatus embeds a plurality of vocabularies in a vector space on the basis of similar vocabulary information in which, for a plurality of different types of parts of speech, vocabularies that are synonymous or similar to a predetermined degree or more are associated. The information processing apparatus calculates, for each of a first sentence and a second sentence, a vector of the sentence on the basis of a vector in the vector space of each of a plurality of vocabularies included in the sentence. The information processing apparatus determines similarity between the first sentence and the second sentence on the basis of the vector of the first sentence and the vector of the second sentence.

FIG. 1

**Description**

FIELD

The present invention relates to an information processing program or the like.

BACKGROUND

There is Word2vec (Skip-Gram Model or CBOW) or the like as a conventional technology of analyzing a text or a sentence (hereinafter simply referred to as sentence) and expressing each word included in the sentence by a vector. There is a characteristic that words mutually having similar meanings have similar vector values even when the words have different expressions. In the following description, a vector of a word is referred to as a "word vector". For example, in Word2vec, a word vector is expressed in 200 dimensions.

A vector of a sentence is calculated by accumulating word vectors of words included in a sentence. In the following description, a vector of a sentence is referred to as a "sentence vector". There is a characteristic that sentences mutually having similar meanings have similar sentence vector values even when the sentences have different expressions. For example, meaning of a sentence "I like apples." and meaning of a sentence "Apples are my favorite." are the same, and a sentence vector of "I like apples." and a sentence vector of "Apples are my favorite." have to be similar.

Note that there is also a technology called Poincare Embeddings as a technology of assigning vectors to words. In this technology, a relationship between a word and a category is defined, and the word is embedded in a Poincare space on the basis of the defined relationship. Then, in the Poincare space, a vector corresponding to a position of the embedded word is assigned to the word.

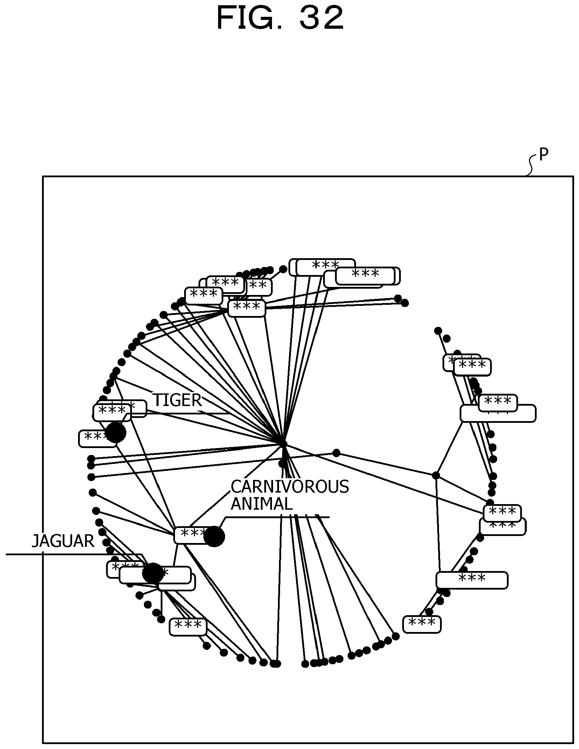

FIG. 32 is a diagram for describing embedding in the Poincare space. For example, in a case where words such as "tiger" and "jaguar" are defined for a category "carnivorous animal", the word "carnivorous animal", the word "tiger", and the word "jaguar" are embedded in a Poincare space P. Then, vectors corresponding to positions on the Poincare space P are assigned to the word "carnivorous animal", the word "tiger", and the word "jaguar".

CITATION LIST

NON-PATENT DOCUMENT

Non-Patent Document 1: Valentin Khrulkov et al. "Hyperbolic Image Embeddings"Cornell University, 2019 April 3

SUMMARY

[TECHNICAL PROBLEM]

In Word2vec, in a case where a word vector of a word included in a sentence is calculated, the word vector of the target word is calculated on the basis of words appearing before and after the target word. Thus, even when words have similar meanings, word vector values may change depending on contents of the sentence. Furthermore, even when words have similar meanings, words that may appear before and after the words differ depending on parts of speech of the words, so that word vector values of the words mutually having the same meaning may not necessarily be similar.

For example, "liked" whose part of speech is "adjective" and "favorite" whose part of speech is "noun" have the same meaning, but the parts of speech are different. Thus, when sentences each including "liked" or "favorite" are compared, a tendency of words appearing before and after "liked" is different from a tendency of words appearing before and after "favorite", and a word vector of "liked" and a word vector of "favorite" are different.

Accordingly, when a sentence vector is calculated by using word vectors calculated by using Word2vec, sentence vector values of sentences having the same meaning may deviate, and it is not possible to accurately calculate the sentence vectors. Therefore, there is a problem that determination accuracy is lowered in a case where similarity of each sentence is determined by using sentence vectors.

Furthermore, in a conventional method of simply embedding a plurality of words whose parts of speech are the same in the Poincare space, it is not possible to accurately calculate a sentence vector as in the case of Word2vec.

Moreover, in Word2vec, there is a problem that, since a word vector is in 200 dimensions, a calculation amount and a data amount are large in a case where a sentence vector is calculated. There are technologies of dimensionally compressing and decompressing vectors, such as principal component analysis. However, the technologies are not suitable for calculating a sentence vector because compression and decompression are performed in different dimensions for each word. The same applies to Poincare Embeddings.

In one aspect, an object of the present invention is to provide an information processing program, an information processing method, and an information processing apparatus capable of accurately and efficiently calculating a sentence vector and improving similarity determination accuracy.

[SOLUTION TO PROBLEM]

In a first idea, a computer is caused to execute the following processing. The computer embeds a plurality of vocabularies in a vector space on the basis of similar vocabulary information in which, for a plurality of different types of parts of speech, vocabularies that are synonymous or similar to a predetermined degree or more are associated. The computer calculates, for each of a first sentence and a second sentence, a vector of the sentence on the basis of a vector in the vector space of each of a plurality of vocabularies included in the sentence. The computer determines similarity between the first sentence and the second sentence on the basis of the vector of the first sentence and the vector of the second sentence.

According to an aspect of the embodiments, an information processing program for causing a computer to execute processing of embedding a plurality of vocabularies in a vector space on the basis of similar vocabulary information in which, for a plurality of different types of parts of speech, vocabularies that are synonymous or similar to a predetermined degree or more are associated; calculating, for each of a first sentence and a second sentence, a vector of the sentence on the basis of a vector in the vector space of each of a plurality of vocabularies included in the sentence; and determining similarity between the first sentence and the second sentence on the basis of the vector of the first sentence and the vector of the second sentence.

[ADVANTAGEOUS EFFECTS OF INVENTION]

A sentence vector may be calculated accurately and efficiently, and similarity determination accuracy may be improved.

BRIEF DESCRIPTION OF DRAWINGS

FIG. 1 is a diagram for describing a reference technology;
FIG. 2 is a diagram for describing processing of an information processing apparatus according to a present first embodiment;
FIG. 3 is a diagram for describing similar vocabulary information according to the present first embodiment;
FIG. 4 is a diagram illustrating an example of an embedding result in a Poincare space;
FIG. 5 is a functional block diagram illustrating a configuration of the information processing apparatus according to the present first embodiment;
FIG. 6 is a diagram illustrating an example of a data structure of text data;
FIG. 7 is a diagram illustrating an example of a data structure of the similar vocabulary information according to the present first embodiment;
FIG. 8 is a diagram illustrating an example of a data structure of a word vector table according to the present first embodiment;
FIG. 9 is a diagram illustrating an example of a data structure of a compressed word vector table according to the present first embodiment;
FIG. 10 is a diagram illustrating an example of a data structure of compressed sentence vector data according to the present first embodiment;
FIG. 11 is a diagram illustrating an example of a data structure of an inverted index according to the present first embodiment;
FIG. 12 is a diagram (1) for describing processing of a dimension compression unit according to the present first embodiment;
FIG. 13 is a diagram (2) for describing the processing of the dimension compression unit according to the present first embodiment;
FIG. 14 is a flowchart (1) illustrating a processing procedure of the information processing apparatus according to the present first embodiment;
FIG. 15 is a flowchart (2) illustrating the processing procedure of the information processing apparatus according to the present first embodiment;
FIG. 16 is a diagram for describing other data structures of the similar vocabulary information;
FIG. 17 is a diagram for describing processing of an information processing apparatus according to a present second embodiment;

FIG. 18 is a diagram illustrating a data structure of similar protein information according to the present second embodiment;

FIG. 19 is a functional block diagram illustrating a configuration of the information processing apparatus according to the present second embodiment;

FIG. 20 is a diagram for describing a genome;

FIG. 21 is a diagram illustrating relationships between amino acids, bases, and codons;

FIG. 22 is a diagram illustrating an example of a data structure of a protein dictionary according to the present second embodiment;

FIG. 23 is a diagram illustrating an example of a data structure of primary structure data according to the present second embodiment;

FIG. 24 is a diagram illustrating an example of a data structure of a protein vector table according to the present second embodiment;

FIG. 25 is a diagram illustrating an example of a data structure of a compressed protein vector table according to the present second embodiment;

FIG. 26 is a diagram illustrating an example of a data structure of compressed primary structure vector data according to the present second embodiment;

FIG. 27 is a diagram illustrating an example of a data structure of an inverted index according to the present second embodiment;

FIG. 28 is a flowchart (1) illustrating a processing procedure of the information processing apparatus according to the present second embodiment;

FIG. 29 is a flowchart (2) illustrating the processing procedure of the information processing apparatus according to the present second embodiment;

FIG. 30 is a diagram illustrating an example of a hardware configuration of a computer that implements functions similar to those of the information processing apparatus according to the first embodiment;

FIG. 31 is a diagram illustrating an example of a hardware configuration of a computer that implements functions similar to those of the information processing apparatus according to the second embodiment; and

FIG. 32 is a diagram for describing embedding in the Poincare space.

DESCRIPTION OF EMBODIMENTS

Embodiments of an information processing program, an information processing method, and an information processing apparatus disclosed in the present application are hereinafter described in detail with reference to the drawings. Note that the present invention is not limited by the embodiments.

[First Embodiment]

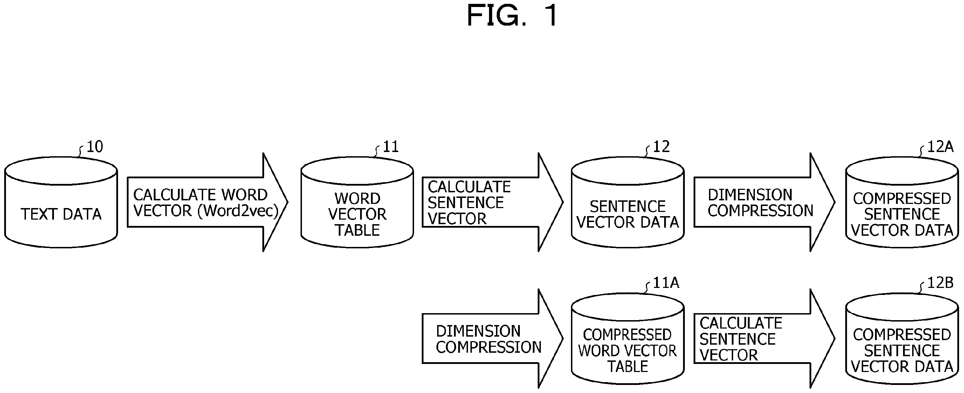

Prior to description of an information processing apparatus according to a present first embodiment, a reference technology of calculating a sentence vector will be described. FIG. 1 is a diagram for describing the reference technology. As illustrated in FIG. 1, in the reference technology, a word vector table 11 is generated by calculating a word vector of each word included in text data 10 by Word2vec. In the word vector table 11, words and word vectors are associated. For example, a dimension of a word vector in the word vector table 11 is 200 dimensions.

In the reference technology, the word vector table 11 is used to calculate a sentence vector of each sentence included in the text data 10. In the reference technology, a sentence vector of a sentence is calculated by dividing the sentence into a plurality of words and accumulating a word vector of each word. In the reference technology, the 200-dimensional word vectors registered in the word vector table 11 are used to calculate sentence vector data 12.

Furthermore, in the reference technology, the number of dimensions of a sentence vector is compressed by using principal component analysis. A sentence vector with the compressed number of dimensions is referred to as a "compressed sentence vector". In the reference technology, the processing described above is repeatedly executed for a plurality of other sentences to calculate compressed sentence vectors for the plurality of other sentences and generate compressed sentence vector data 12A.

In the reference technology, a word vector of each word included in the text data 10 is calculated in 200 dimensions by Word2vec. Thus, in a case where a sentence vector is calculated, 200-dimensional word vectors are accumulated as they are, so that a calculation amount becomes large. Moreover, in a case where a degree of similarity of each sentence is compared, since a compressed sentence vector is not compressed to a common dimension in the principal component analysis, it is not possible to perform evaluation with the compressed sentence vector as it is. Thus, it is needed to decompress each sentence to 200-dimensional sentence vectors and compare degrees of similarity, which increases the calculation amount.

**EP 4 080 379 A1**

On the other hand, in the reference technology, each word vector is subjected to the principal component analysis to generate a compressed word vector table 11A. Then, the compressed word vector table 11A is used to calculate a sentence vector of each sentence included in the text data 10 and generate compressed sentence vector data 12B. However, in the principal component analysis, since each word vector is not common and individually dimensionally compressed, it is not suitable for calculating a sentence vector.

Similarly, also in Poincare Embeddings, a problem occurs in calculation of a sentence vector by 200 dimensions or in a compressed word vector table by principal component analysis.

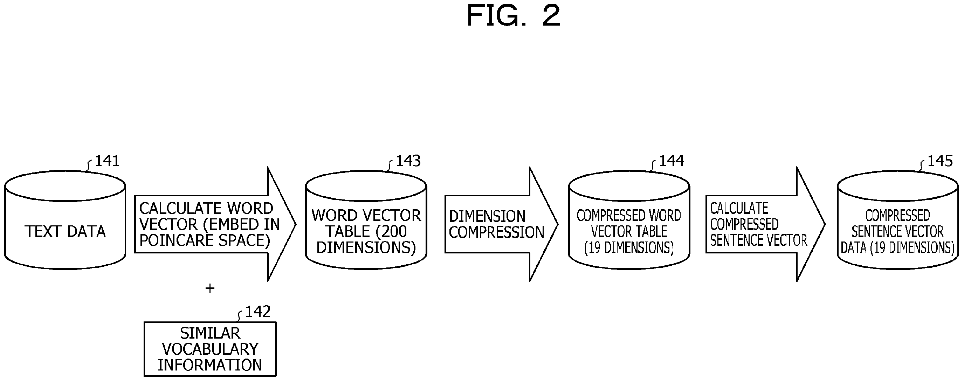

Subsequently, an example of processing of the information processing apparatus according to the present first embodiment will be described. FIG. 2 is a diagram for describing the processing of the information processing apparatus according to the present first embodiment. As illustrated in FIG. 2, the information processing apparatus embeds a word included in text data 141 in a Poincare space on the basis of similar vocabulary information 142, and calculates a word vector.

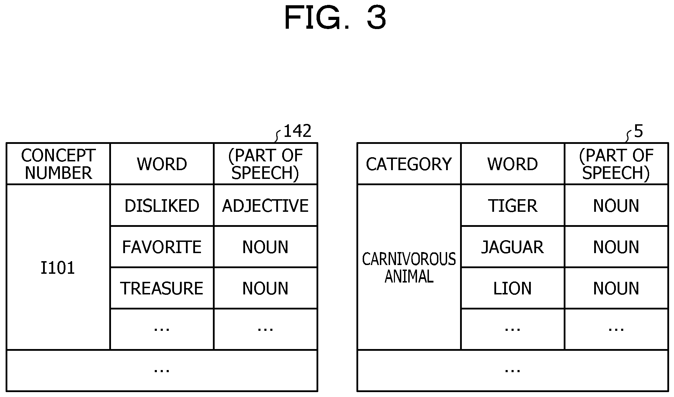

FIG. 3 is a diagram for describing the similar vocabulary information according to the present first embodiment. In FIG. 3, the similar vocabulary information 142 used in the present first embodiment and definition information 5 used in Poincare Embeddings of the conventional technology are indicated.

The similar vocabulary information 142 associates a concept number, a word, and a part of speech. For convenience, a part of speech corresponding to a word is indicated for performing comparison with the definition information 5. The similar vocabulary information 142 associates a plurality of words (vocabularies) that is synonymous or similar to a predetermined degree or more with the same concept number. For example, a word "liked", a word "favorite", a word "treasure", and the like are associated with a concept number "1101". A part of speech of the word "liked" is "adjective", a part of speech of the word "favorite" is "noun", and a part of speech of the word "treasure" is "noun", and even words whose parts of speech are different are associated with the same concept number when the words have similar meanings.

The definition information 5 associates a category and a word. Here, for convenience, a part of speech corresponding to a word is indicated for performing comparison with the similar vocabulary information 142. In the definition information 5, words whose part of speech is a noun are classified by categories. In the example illustrated in FIG. 3, a word "tiger", a word "jaguar", and a word "lion" are associated with a category "carnivorous animal". The part of speech of the words in the definition information 5 is limited to the noun.

For example, in the similar vocabulary information 142, as compared with the definition information 5, a plurality of words that is synonymous or similar to a predetermined degree or more is assigned to the same concept number regardless of types of the parts of speech of the words. In the case of embedding words in the Poincare space, the information processing apparatus according to the present first embodiment aggregates each word corresponding to the same concept number defined in the similar vocabulary information 142 at an approximate position on the Poincare space.

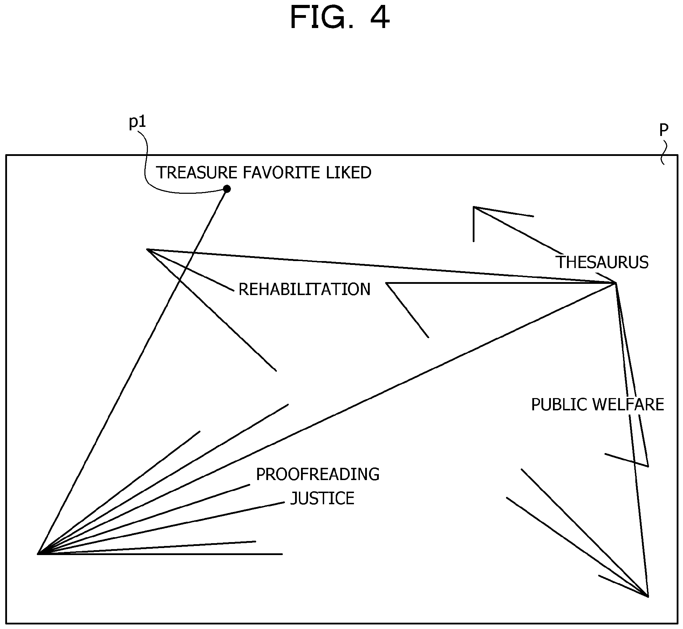

FIG. 4 is a diagram illustrating an example of an embedding result in the Poincare space. As illustrated in FIG. 4, since the same concept number is assigned to the word "liked", the word "favorite", and the word "treasure", these words are embedded in an approximate position p1 in a Poincare space P. The information processing apparatus assigns a word vector corresponding to the position p1 on the Poincare space P to each of the word "liked", the word "favorite", and the word "treasure". With this configuration, approximate word vectors are assigned to words corresponding to the same concept number. A dimension of a vector corresponding to a position on the Poincare space may be set as appropriate, and in the present first embodiment, the dimension is set to 200 dimensions.

Return to the description of FIG. 2. Also for other words included in the text data 141, the information processing apparatus performs embedding in the Poincare space on the basis of the similar vocabulary information 142, to calculate word vectors and generate a word vector table 143. In the word vector table 143, words and word vectors are associated. For example, a dimension of a word vector in the word vector table 143 is 200 dimensions.

The information processing apparatus compresses the dimension of each word vector stored in the word vector table 143 before calculating a sentence vector. For example, the information processing apparatus generates a word vector obtained by compressing a dimension by compressing a 200-dimensional word vector into a 19-dimensional (19-dimensional is an example) word vector. A word vector obtained by compressing a dimension is referred to as a "compressed word vector". The information processing apparatus compresses each word vector in the word vector table 143 to generate a compressed word vector table 144.

The information processing apparatus uses the compressed word vector table 144 to calculate a compressed sentence vector of each sentence included in the text data 141. The information processing apparatus divides a sentence into a plurality of words, and acquires a compressed word vector of each word from the compressed word vector table 144. The information processing apparatus accumulates each word vector to calculate a compressed sentence vector of a sentence. The information processing apparatus repeatedly executes the processing described above for a plurality of other sentences to calculate compressed sentence vectors for the plurality of other sentences and generate 19-dimensional compressed sentence vector data 145.

The information processing apparatus according to the present first embodiment performs embedding in the Poincare space on the basis of the similar vocabulary information 142, to calculate word vectors and generate the word vector table 143. Unlike Word2vec described in the reference technology, it is possible to generate the word vector table 143 in which approximate word vectors are assigned to a plurality of words that is synonymous or similar to a predetermined degree or more. Thus, when sentence vectors are calculated by using the word vector table 143, sentence vectors of sentences mutually having the same meaning become similar sentence vectors, and the sentence vectors may be calculated accurately. Furthermore, in a case where similarity is determined by comparing a plurality of sentence vectors, since the sentence vectors may be calculated accurately, similarity determination accuracy is improved.

Furthermore, since the information processing apparatus generates the compressed word vector table 144 obtained by compressing the word vector table 143 into common 19 dimensions, and calculates a compressed sentence vector by using compressed word vectors, a calculation amount may be significantly reduced compared with a sentence vector calculation amount in 200 dimensions of the reference technology. Moreover, since a degree of similarity of each sentence may be evaluated with a common 19-dimensional compressed sentence vector as it is, the calculation amount may be significantly reduced compared with the reference technology in which decompression to a 200-dimensional sentence vector and evaluation of a degree of similarity in 200 dimensions are performed.

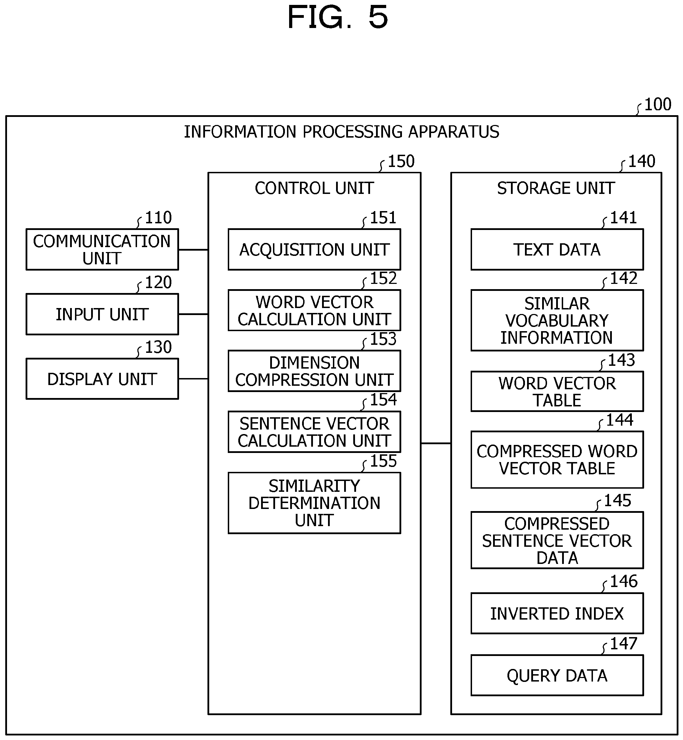

Next, a configuration of the information processing apparatus according to the present first embodiment will be described. FIG. 5 is a functional block diagram illustrating the configuration of the information processing apparatus according to the present first embodiment. As illustrated in FIG. 5, an information processing apparatus 100 includes a communication unit 110, an input unit 120, a display unit 130, a storage unit 140, and a control unit 150.

The communication unit 110 is a processing unit that executes information communication with an external device (not illustrated) via a network. The communication unit 110 corresponds to a communication device such as a network interface card (NIC). For example, the control unit 150 to be described below exchanges information with an external device via the communication unit 110.

The input unit 120 is an input device that inputs various types of information to the information processing apparatus 100. The input unit 120 corresponds to a keyboard, a mouse, a touch panel, or the like. A user may operate the input unit 120 to input query data 147 to be described below.

The display unit 130 is a display device that displays information output from the control unit 150. The display unit 130 corresponds to a liquid crystal display, an organic electro luminescence (EL) display, a touch panel, or the like. The display unit 130 displays information output from the control unit 150.

The storage unit 140 includes the text data 141, the similar vocabulary information 142, the word vector table 143, the compressed word vector table 144, the compressed sentence vector data 145, an inverted index 146, and the query data 147. The storage unit 140 corresponds to a semiconductor memory element such as a random access memory (RAM) or a flash memory, or a storage device such as a hard disk drive (HDD).

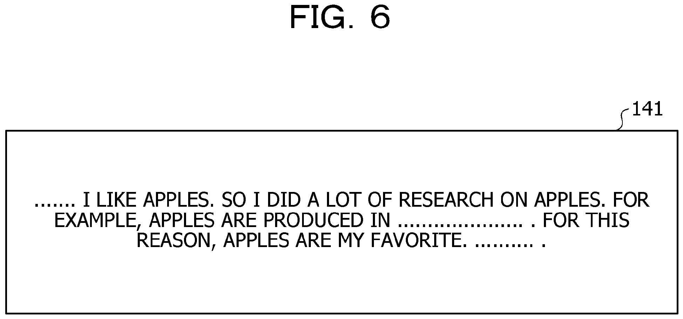

The text data 141 is information (text) including a plurality of sentences. Sentences are delimited by punctuation marks. FIG. 6 is a diagram illustrating an example of a data structure of the text data. As illustrated in FIG. 6, the text data 141 includes a plurality of sentences. Contents of the text data 141 are not limited to those of FIG. 6.

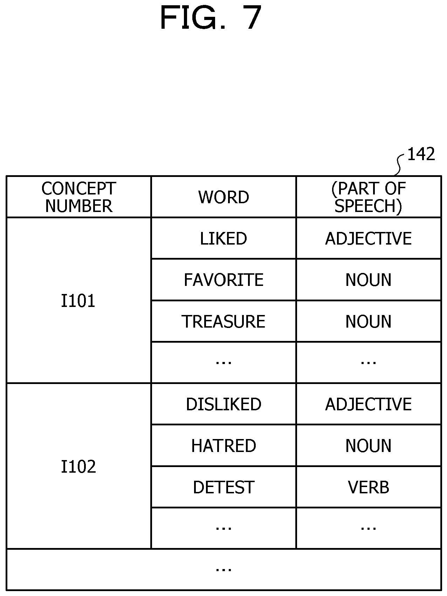

The similar vocabulary information 142 is information that associates a plurality of words (vocabularies) that is synonymous or similar to a predetermined degree or more with the same concept number. FIG. 7 is a diagram illustrating an example of a data structure of the similar vocabulary information according to the present first embodiment. As illustrated in FIG. 7, the similar vocabulary information 142 associates a concept number, a word, and a part of speech. For example, a word "liked", a word "favorite", a word "treasure", and the like are associated with a concept number "1101". A part of speech of the word "liked" is "adjective", a part of speech of the word "favorite" is "noun", and a part of speech of the word "treasure" is "noun". The similar vocabulary information 142 does not necessarily have to include information regarding the part of speech.

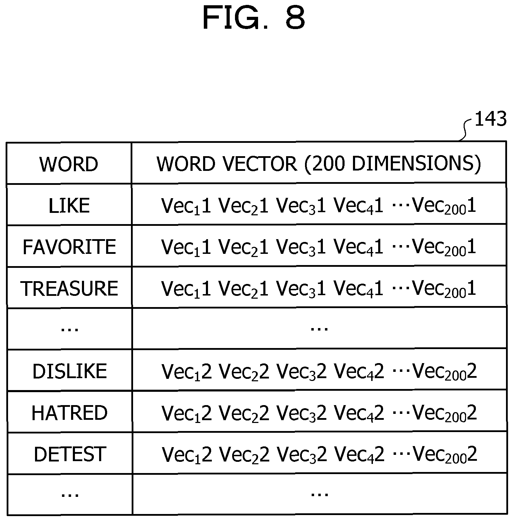

The word vector table 143 is a table that retains information regarding a word vector of each word. FIG. 8 is a diagram illustrating an example of a data structure of the word vector table according to the present first embodiment. As illustrated in FIG. 8, the word vector table 143 associates a word and a word vector. Each word vector is a word vector calculated by embedding in the Poincare space, and is assumed to be, for example, a 200-dimensional vector.

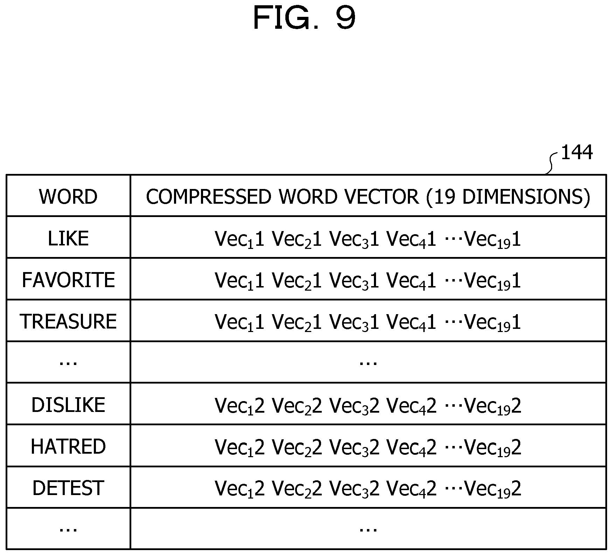

The compressed word vector table 144 is a table that retains information regarding each word vector obtained by dimension compression (compressed word vector). FIG. 9 is a diagram illustrating an example of a data structure of the compressed word vector table according to the present first embodiment. As illustrated in FIG. 9, the compressed word vector table 144 associates a word and a compressed word vector. For example, a dimension of the compressed word vector is assumed to be 19 dimensions, but the dimension is not limited to this.

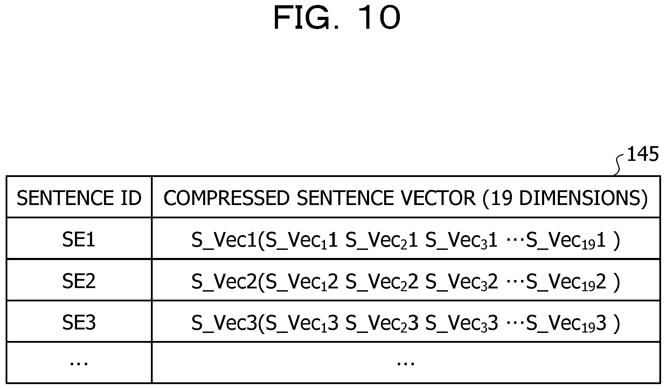

The compressed sentence vector data 145 is a table that retains information regarding a compressed sentence vector of each sentence included in the text data 141. FIG. 10 is a diagram illustrating an example of a data structure of the compressed sentence vector data according to the present first embodiment. As illustrated in FIG. 10, the compressed sentence vector data 145 associates a sentence ID and a compressed sentence vector. The sentence ID is information that uniquely identifies a sentence included in the text data 141. The compressed sentence vector is a compressed sentence vector of a sentence identified by the sentence ID. For example, a compressed sentence vector with a sentence ID "SE1" is "$S\_Vec_1 1\ S\_Vec_2 1\ S\_Vec_3 1... S\_Vec_{19} 1$". "$S\_Vecil\ S\_Vec_2 1\ S\_Vec_3 1... S\_Vec_{19} 1$" are collectively referred to as S_Vec1. The same applies to other compressed sentence vectors.

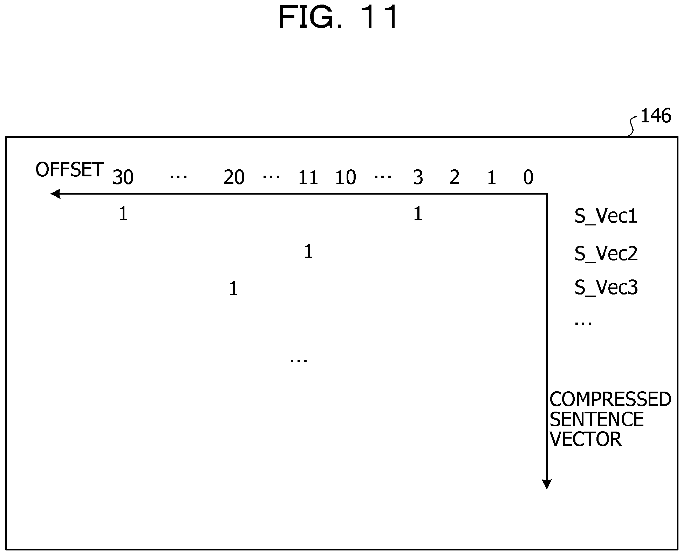

The inverted index 146 associates a compressed sentence vector of a sentence and a position (offset) on the text data 141 of the sentence corresponding to the compressed sentence vector. For example, an offset of a first word on the text data 141 becomes "0", and an offset of an M-th word from the beginning becomes "M-1". FIG. 11 is a diagram illustrating an example of a data structure of the inverted index according to the present first embodiment. In the inverted index 146 illustrated in FIG. 11, a horizontal axis indicates an offset on the text data 141. A vertical axis corresponds to a compressed sentence vector of a sentence. For example, it is indicated that a first word of a sentence with a compressed sentence vector "S_Vec1" is positioned at offsets "3" and "30" on the text data 141.

The query data 147 is data of a sentence specified in similarity search. In the present first embodiment, as an example, a sentence included in the query data 147 is assumed to be one sentence.

Return to the description of FIG. 5. The control unit 150 includes an acquisition unit 151, a word vector calculation unit 152, a dimension compression unit 153, a sentence vector calculation unit 154, and a similarity determination unit 155. The control unit 150 may be implemented by a central processing unit (CPU), a micro processing unit (MPU), or the like. Furthermore, the control unit 150 may also be implemented by hard wired logic such as an application specific integrated circuit (ASIC) or a field programmable gate array (FPGA).

The acquisition unit 151 is a processing unit that acquires various types of information from an external device or the input unit 120. For example, in a case where the text data 141, the similar vocabulary information 142, the query data 147, and the like are received, the acquisition unit 151 stores, in the storage unit 140, the received text data 141, similar vocabulary information 142, query data 147, and the like.

The word vector calculation unit 152 is a processing unit that embeds a word (vocabulary) included in the text data 141 in the Poincare space and calculates a word vector according to a position of the word embedded in the Poincare space. In the case of embedding a word in the Poincare space, the word vector calculation unit 152 refers to the similar vocabulary information 142 and embeds each word corresponding to the same concept number at an approximate position.

For example, the word vector calculation unit 152 embeds the word "liked", the word "favorite", and the word "treasure" in an approximate position on the Poincare space, and calculates word vectors according to the position. The word vector calculation unit 152 registers a word and a word vector in the word vector table 143 in association with each other. The word vector calculation unit 152 repeatedly executes the processing described above also for other words, to calculate word vectors corresponding to the words and register the word vectors in the word vector table 143.

The dimension compression unit 153 is a processing unit that compresses a dimension of a word vector stored in the word vector table 143 to generate the compressed word vector table 144. The dimension compression unit 153 evenly distributes and arranges, in a circle, respective 200 vectors $a_i e_i$ (i = 1 to 200), which are component-decomposed into 200 dimensions. "$e_i$" is a basis vector. In the following description, a component-decomposed vector is referred to as a basis vector. The dimension compression unit 153 selects one basis vector of a prime number, and integrates a value obtained by orthogonally transforming basis vectors of other dimensions into the basis vector. The dimension compression unit 153 executes the processing described above on the basis vectors of 1 or prime numbers of 19 dimensions distributed to dimensionally compress a 200-dimensional vector into a 19-dimensional vector. For example, the dimension compression unit 153 calculates each of basis vector values of 1 or prime numbers "1", "11", "23", "41", "43", "53", "61", "73", "83", "97", "107", "113", "127", "137", "149", "157", "167", "179", and "191" to perform dimension compression into a 19-dimensional vector.

Note that, although a 19-dimensional vector is described as an example in the present embodiment, it may be a vector of another dimension. By selecting the basis vectors of 1 or prime numbers divided by the prime numbers "3 or more" and distributed, it becomes possible to implement highly accurate dimension decompression, although it is irreversible. Note that, while the accuracy is improved as the prime number to be divided increases, a compression rate is lowered.

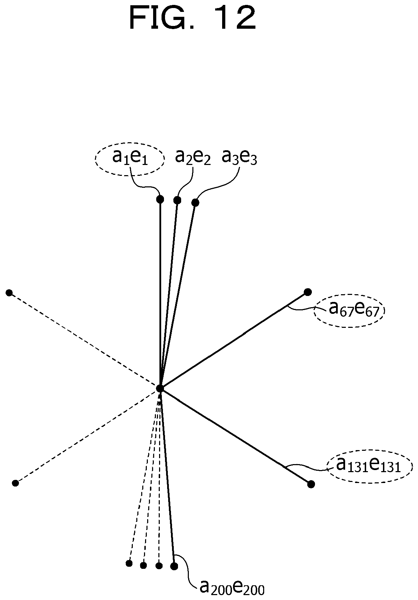

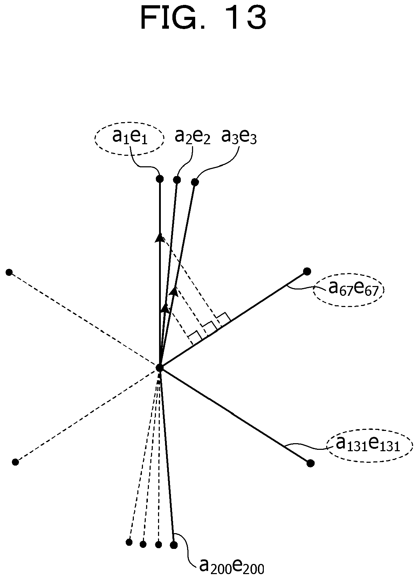

FIGs. 12 and 13 are diagrams for describing processing of the dimension compression unit according to the present first embodiment. As illustrated in FIG. 12, the dimension compression unit 153 evenly distributes and arranges, in a circle (semicircle), 200 basis vectors $a_i e_i$ (i = 1 to 200), which are component-decomposed into 200 dimensions. Note that a relationship between a vector A before component decomposition and each component-decomposed basis vector $a_i e_i$ is defined by Formula (1). In FIG. 12, as an example, a case of compressing 200 dimensions to three dimensions will be described, but the same applies to a case of compressing 200 dimensions to 19 dimensions.

[Expression 1]

$$A = \sum_{i=1}^{200} a_i e_i \qquad \cdots (1)$$

As illustrated in FIG. 13, first, the dimension compression unit 153 orthogonally transforms the respective remaining basis vectors $a_2 e_2$ to $a_{200} e_{200}$ with respect to the basis vector $a_1 e_1$, and integrates the values of the respective orthogonally transformed basis vectors $a_2 e_2$ to $a_{200} e_{200}$, thereby calculating a value of the basis vector $a_1 e_1$.

The dimension compression unit 153 orthogonally transforms the respective remaining basis vectors $a_1 e_1$ (solid line + arrow), $a_2 e_2$, $a_3 e_3$ to $a_{66} e_{66}$, and $a_{68} e_{68}$ to $a_{200} e_{200}$ with respect to the basis vector $a_{67} e_{67}$, and integrates the values of the respective orthogonally transformed basis vectors $a_1 e_1$ to $a_{66} e_{66}$ and $a_{68} e_{68}$ to $a_{200} e_{200}$, thereby calculating a value of the basis vector $a_{67} e_{67}$.

The dimension compression unit 153 orthogonally transforms the respective remaining basis vectors $a_1 e_1$ to $a_{130} e_{130}$ and $a_{132} e_{132}$ to $a_{200} e_{200}$ with respect to the basis vector $a_{131} e_{131}$, and integrates the values of the respective orthogonally transformed basis vectors $a_1 e_1$ to $a_{130} e_{130}$ and $a_{132} e_{132}$ to $a_{20} e_{200}$, thereby calculating a value of the basis vector $a_{131} e_{131}$.

The dimension compression unit 153 sets the respective components of the compressed vector obtained by dimensionally compressing the 200-dimensional vector as "the value of the basis vector $a_1 e_1$, the value of the basis vector $a_{67} e_{67}$, and the value of the basis vector $a_{131} e_{131}$". The dimension compression unit 153 also calculates other dimensions in a similar manner. Note that the dimension compression unit 153 may perform dimension compression by using KL expansion or the like. The dimension compression unit 153 executes the dimension compression described above for each word of the word vector table 143 to generate the compressed word vector table 144.

Return to the description of FIG. 5. The sentence vector calculation unit 154 is a processing unit that calculates a sentence vector of each sentence included in the text data 141. The sentence vector calculation unit 154 scans the text data 141 from the beginning and extracts a sentence. It is assumed that sentences included in the text data 141 are delimited by punctuation marks.

The sentence vector calculation unit 154 executes morphological analysis on a sentence to divide the sentence into a plurality of words. The sentence vector calculation unit 154 compares the words included in the sentence with the compressed word vector table 144, and acquires a compressed word vector of each word included in the sentence. The sentence vector calculation unit 154 accumulates (sums up) the compressed word vector of each word included in the sentence to calculate a compressed sentence vector. The sentence vector calculation unit 154 assigns a sentence ID to the sentence, and registers the sentence ID and the compressed sentence vector in the compressed sentence vector data 145 in association with each other.

Furthermore, the sentence vector calculation unit 154 refers to the inverted index 146, and sets a flag "1" at an intersection of an offset of the sentence corresponding to the compressed sentence vector and the compressed sentence vector. For example, in a case where a sentence of a compressed sentence vector "S_Vec1" is positioned at offsets "3" and "30", the sentence vector calculation unit 154 sets a flag "1" at an intersection of a column of the offset "3" and a row of the compressed sentence vector "S_Vec1", and an intersection of a column of the offset "30" and the row of the compressed sentence vector "S_Vec1".

The sentence vector calculation unit 154 repeatedly executes the processing described above also for other sentences included in the text data 141, to execute registration of compressed sentence vectors with respect to the compressed sentence vector data 145 and setting of flags to the inverted index 146.

The similarity determination unit 155 is a processing unit that determines similarity between a vector of a first sentence and a vector of a second sentence. Here, as an example, it is assumed that the vector of the first sentence is a compressed sentence vector of a sentence included in the query data 147. Description will be made assuming that the vector of the second sentence is a compressed sentence vector (compressed sentence vector arranged on the vertical axis of the inverted index 146) of the compressed sentence vector data 145, but the present invention is not limited to this.

The similarity determination unit 155 executes morphological analysis on a sentence included in the query data 147 to divide the sentence into a plurality of words. The similarity determination unit 155 compares the words included in the sentence with the compressed word vector table 144, and acquires a compressed word vector of each word included in the sentence. The similarity determination unit 155 accumulates (sums up) the compressed word vector of each word included in the sentence to calculate a compressed sentence vector. In the following description, a compressed sentence vector of the query data 147 is referred to as a "first compressed sentence vector". A compressed sentence vector (compressed sentence vector arranged on the vertical axis of the inverted index 146) registered in the compressed sentence vector data 145 is referred to as a "second compressed sentence vector".

The similarity determination unit 155 calculates a degree of similarity between the first compressed sentence vector and the second compressed sentence vector on the basis of Formula (2). For example, the closer a distance between the first compressed sentence vector and the second compressed sentence vector, the greater the degree of similarity.
[Expression 2]

$$\text{cosine\_similarity} = \cos(\theta) = \frac{A \cdot B}{\|A\|\|B\|} \qquad \cdots (2)$$

The similarity determination unit 155 specifies the second compressed sentence vector whose degree of similarity with the first compressed sentence vector is equal to or greater than a threshold. In the following description, a second compressed sentence vector whose degree of similarity with the first compressed sentence vector is equal to or greater than a threshold is referred to as a "specific compressed sentence vector".

The similarity determination unit 155 specifies an offset of a sentence corresponding to the specific compressed sentence vector on the basis of a flag of a row corresponding to the specific compressed sentence vector among rows of the second compressed sentence vectors of the inverted index 146. For example, in a case where the specific compressed sentence vector is "S_Vec1", offsets "3" and "30" are specified.

The similarity determination unit 155 acquires a sentence corresponding to the compressed word sentence vector from the text data 141 on the basis of the specified offset. The similarity determination unit 155 outputs the acquired sentence as a sentence similar to the sentence specified in the query data 147 to the display unit 130 for display.

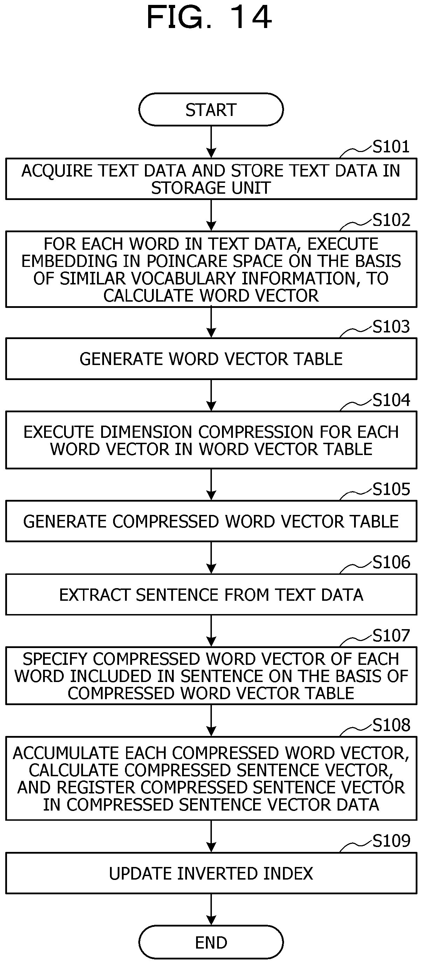

Next, an example of a processing procedure of the information processing apparatus 100 according to the present first embodiment will be described. FIG. 14 is a flowchart (1) illustrating the processing procedure of the information processing apparatus according to the present first embodiment. As illustrated in FIG. 14, the acquisition unit 151 of the information processing apparatus 100 acquires the text data 141, and stores the text data 141 in the storage unit 140 (Step S101).

For each word in the text data 141, the word vector calculation unit 152 of the information processing apparatus 100 executes embedding in the Poincare space on the basis of the similar vocabulary information 142, to calculate a word vector (Step S102). The word vector calculation unit 152 generates the word vector table 143 (Step S103).

The dimension compression unit 153 of the information processing apparatus 100 executes dimension compression for each word vector in the word vector table 143 (Step S104). The dimension compression unit 153 generates the compressed word vector table 144 (Step S105).

The sentence vector calculation unit 154 of the information processing apparatus 100 extracts a sentence from the text data 141 (Step S106). The sentence vector calculation unit 154 specifies a compressed word vector of each word included in the sentence on the basis of the compressed word vector table 144 (Step S107).

The sentence vector calculation unit 154 accumulates each compressed word vector, calculates a compressed sentence vector, and registers the compressed sentence vector in the compressed sentence vector data 145 (Step S108). The sentence vector calculation unit 154 generates the inverted index 146 on the basis of a relationship between an offset of the sentence on the text data 141 and the compressed sentence vector (Step S109).

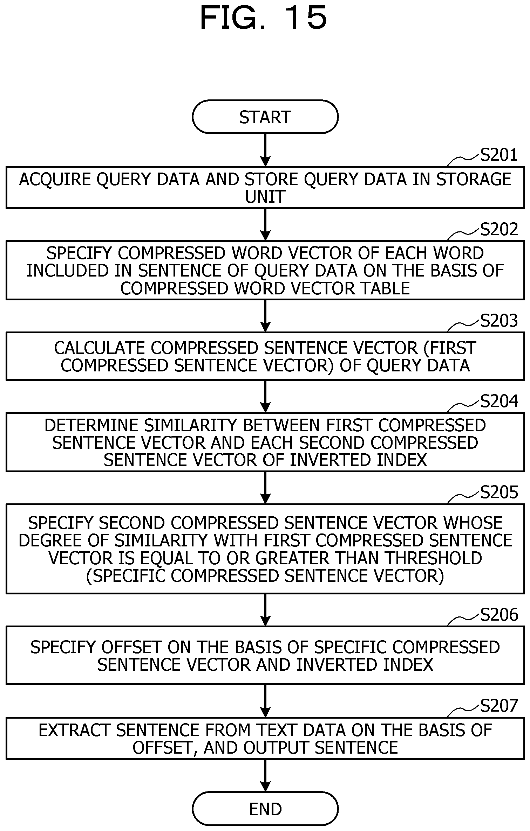

FIG. 15 is a flowchart (2) illustrating the processing procedure of the information processing apparatus according to the present first embodiment. As illustrated in FIG. 15, the acquisition unit 151 of the information processing apparatus 100 acquires the query data 147, and stores the query data 147 in the storage unit 140 (Step S201).

The similarity determination unit 155 of the information processing apparatus 100 specifies a compressed word vector of each word included in a sentence of the query data 147 on the basis of the compressed word vector table 144 (Step S202). The similarity determination unit 155 accumulates the compressed word vector of each word and calculates a compressed sentence vector (first compressed sentence vector) of the query data 147 (Step S203).

The similarity determination unit 155 determines similarity between the first compressed sentence vector and each second compressed sentence vector of the inverted index 146 (Step S204). The similarity determination unit 155 specifies a second compressed sentence vector whose degree of similarity with the first compressed sentence vector is equal to or greater than a threshold (specific compressed sentence vector) (Step S205).

The similarity determination unit 155 specifies an offset on the basis of the specific compressed sentence vector and the inverted index 146 (Step S206). The similarity determination unit 155 extracts a sentence from the text data 141 on the basis of the offset, and outputs the sentence to the display unit 130 (Step S207).

Next, effects of the information processing apparatus 100 according to the present first embodiment will be described. The information processing apparatus 100 performs embedding in the Poincare space on the basis of the similar vocabulary information 142, to calculate a word vector and generate the word vector table 143. Unlike Word2vec described in the reference technology, it is possible to generate the word vector table 143 in which approximate word vectors are assigned to a plurality of words that is synonymous or similar to a predetermined degree or more. Thus, when sentence vectors are calculated by using the word vector table 143, sentence vectors of sentences mutually having the same meaning become similar sentence vectors, and the sentence vectors may be calculated accurately. Furthermore, in a case where similarity is determined by comparing a plurality of sentence vectors, since the sentence vectors may be calculated accurately, similarity determination accuracy is improved. For example, a sentence similar to the sentence specified in the query data 147 may be appropriately searched from the text data 141.

Since the information processing apparatus 100 generates the compressed word vector table 144 obtained by compressing the dimension of the word vector table 143, and calculates a sentence vector by using compressed word vectors, a calculation amount may be reduced compared with a sentence vector calculation amount of the reference technology.

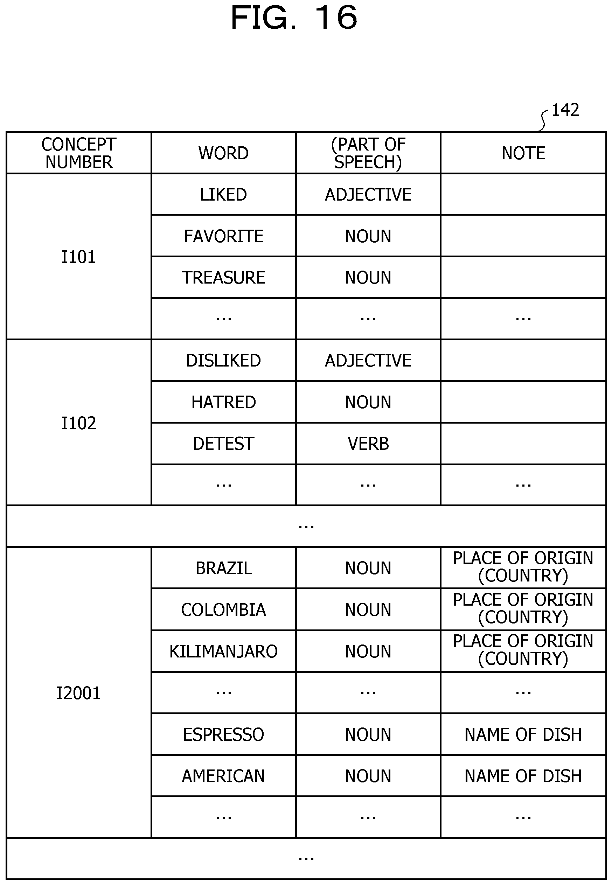

Incidentally, the data structure of the similar vocabulary information 142 described in FIG. 7 is an example, and may be a data structure illustrated in FIG. 16. FIG. 16 is a diagram for describing other data structures of the similar vocabulary information. As illustrated in FIG. 16, in the similar vocabulary information 142, words "Brazil", "Colombia", "Kilimanjaro", "Espresso", "American", and the like with the same parts of speech "noun" and in the same category of coffee may be associated with the same concept number. The words "Brazil", "Colombia", and "Kilimanjaro" are words that indicate places of origin or countries. "Espresso" and "American" are words that indicate names of dishes. The word vector calculation unit 152 of the information processing apparatus 100 may execute embedding in the Poincare space by using the similar vocabulary information 142 illustrated in FIG. 16, to calculate a word vector.

[Second Embodiment]

In the first embodiment, a case has been described where a sentence vector of a sentence including a plurality of words is calculated and similarity of each sentence vector is determined, but the present invention is not limited to this. For example, also for a primary structure of a protein (hereinafter simply referred to as the primary structure) including a plurality of proteins, vectors of the protein and the primary structure may be calculated by regarding one protein as one word and also one primary structure as one sentence. By using the vector of the primary structure, similarity of each primary structure may be determined.

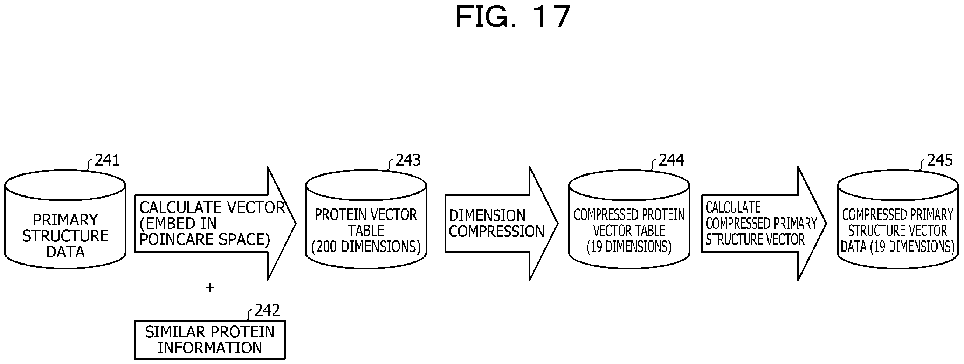

FIG. 17 is a diagram for describing processing of an information processing apparatus according to a present second embodiment. As illustrated in FIG. 17, the information processing apparatus regards each protein included in primary structure data 241 of a protein as a word on the basis of similar protein information 242, performs embedding in a Poincare space, and calculates a vector of the protein. In the following description, a vector of a protein is referred to as a "protein vector".

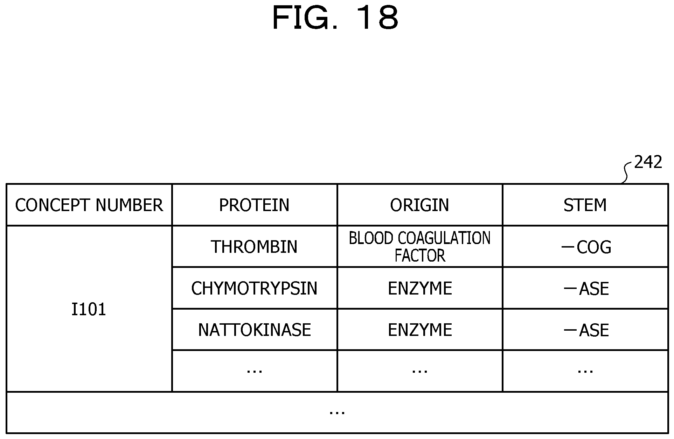

FIG. 18 is a diagram illustrating a data structure of the similar protein information according to the present second embodiment. The similar protein information 242 associates a concept number, a protein, an origin, and a stem. The similar protein information 242 associates proteins having similar properties to the same concept number. For example, proteins "thrombin", "chymotrypsin", "nattokinase", and the like are associated with a concept number "1101".

The origin indicates an origin of a protein. For example, an origin of the protein "thrombin" is "blood coagulation factor". An origin of the protein "chymotrypsin" is "enzyme". An origin of the protein "nattokinase" is "enzyme". The stem is attached to an end of a name of a protein, depending on an origin. Exceptionally, ends of the proteins "thrombin" and "chymotrypsin" do not correspond to stems.

For example, in the similar protein information 242, a plurality of proteins having similar properties is assigned to the same concept number regardless of the origins of the proteins. In the case of embedding proteins in the Poincare space, the information processing apparatus according to the present second embodiment aggregates each protein corresponding to the same concept number defined in the similar protein information 242 at an approximate position on the Poincare space.

Return to the description of FIG. 17. Also for other proteins included in the primary structure data 241, the information processing apparatus performs embedding in the Poincare space on the basis of the similar protein information 242, to calculate protein vectors and generate a protein vector table 243. In the protein vector table 243, proteins and protein vectors are associated. For example, a dimension of a protein vector in the protein vector table 243 is 200 dimensions.

The information processing apparatus compresses the dimension of each protein vector included in the protein vector table 243 before calculating a vector of a primary structure. For example, the information processing apparatus generates a compressed protein vector by compressing a 200-dimensional protein vector into a 19-dimensional (19-dimensional is an example) protein vector. A protein vector obtained by compressing a dimension is referred to as a "compressed protein vector". The information processing apparatus compresses each protein vector in the protein vector table 243 to generate a compressed protein vector table 244.

The information processing apparatus uses the compressed protein vector table 244 to calculate a compressed protein vector of each primary structure included in the primary structure data 241. The information processing apparatus divides a primary structure into a plurality of proteins, and acquires a compressed protein vector of each protein from the compressed protein vector table 244. The information processing apparatus accumulates each compressed protein vector to calculate a 19-dimensional vector of a primary structure. In the following description, a vector of a primary structure is referred to as "compressed primary structure vector". The information processing apparatus repeatedly executes the processing described above for a plurality of other primary structures to calculate compressed primary structure vectors for the plurality of other primary structures and generate compressed primary structure vector data 245.

The information processing apparatus according to the present second embodiment performs embedding in the Poincare space on the basis of the similar protein information 242, to calculate protein vectors and generate the protein vector table 243. With this configuration, it is possible to generate the protein vector table 243 in which approximate protein vectors are assigned to a plurality of proteins having similar properties. Thus, when vectors of primary structures are calculated by using the protein vector table 243, primary structures mutually having similar properties become similar vectors of the primary structures, and the vectors of the primary structures may be calculated accurately. Furthermore, in a case where similarity is determined by comparing a plurality of vectors of primary structures, since the vectors of the primary structures may be calculated accurately, similarity determination accuracy is improved.

Furthermore, the information processing apparatus generates the compressed protein vector table 244 obtained by compressing the dimension of the protein vector table 243, and calculates a compressed vector of a primary structure by using compressed protein vectors. Thus, a calculation amount may be reduced as compared with a case where a vector of a primary structure is calculated and then dimension compression is performed.

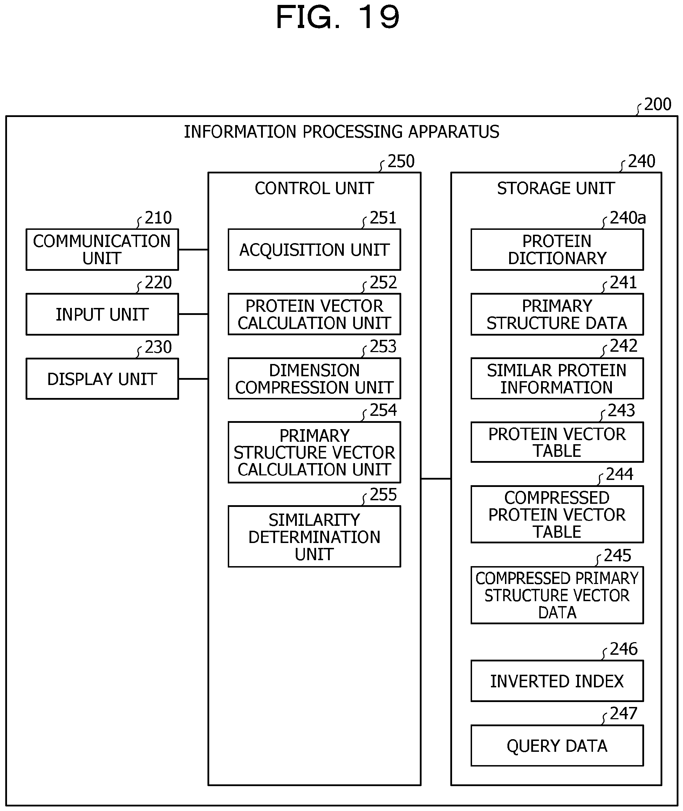

Next, a configuration of the information processing apparatus according to the present second embodiment will be described. FIG. 19 is a functional block diagram illustrating the configuration of the information processing apparatus according to the present second embodiment. As illustrated in FIG. 19, an information processing apparatus 200 includes a communication unit 210, an input unit 220, a display unit 230, a storage unit 240, and a control unit 250.

The communication unit 210 is a processing unit that executes information communication with an external device (not illustrated) via a network. The communication unit 210 corresponds to a communication device such as a NIC. For example, the control unit 250 to be described below exchanges information with an external device via the communication unit 210.

The input unit 220 is an input device that inputs various types of information to the information processing apparatus 200. The input unit 220 corresponds to a keyboard, a mouse, a touch panel, or the like. A user may operate the input unit 220 to input query data 247 to be described below.

The display unit 230 is a display device that displays information output from the control unit 250. The display unit 230 corresponds to a liquid crystal display, an organic EL display, a touch panel, or the like. The display unit 230 displays information output from the control unit 250.

The storage unit 240 includes a protein dictionary 240a, the primary structure data 241, the similar protein information 242, and the protein vector table 243. The storage unit 240 includes the compressed protein vector table 244, the compressed primary structure vector data 245, an inverted index 246, and the query data 247. The storage unit 240 corresponds to a semiconductor memory element such as a RAM or a flash memory, or a storage device such as an HDD.

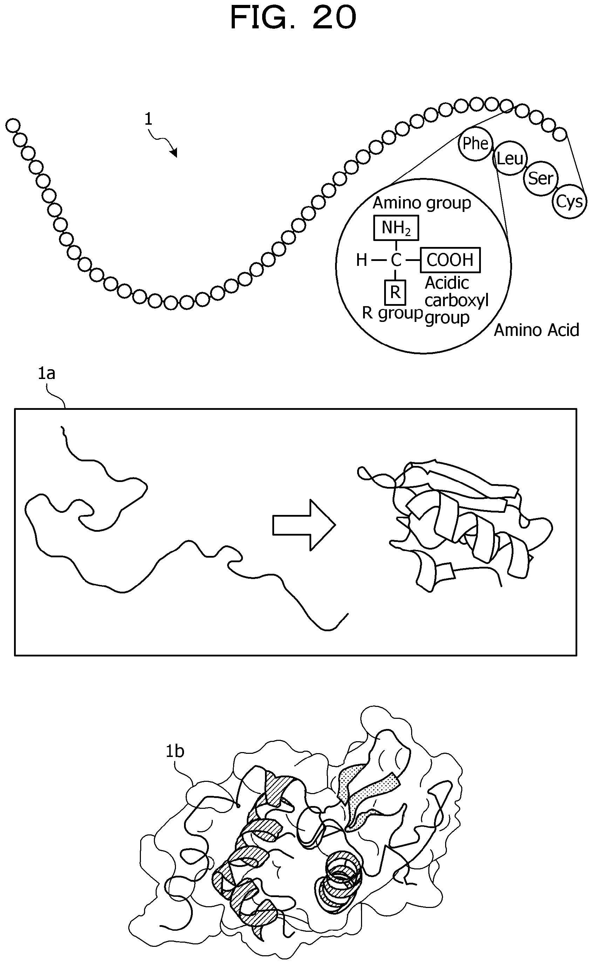

Prior to description of the protein dictionary 240a, a genome will be described. FIG. 20 is a diagram for describing a genome. A genome 1 is genetic information in which a plurality of amino acids is linked. Here, the amino acid is determined by a plurality of bases and codons. Furthermore, the genome 1 includes a protein 1a. The protein 1a includes a chain-like linkage of 20 types of and a large number of amino acids linked to each other. Structures of the protein 1a include a primary structure, a secondary structure, and a tertiary (high-order) structure. A protein 1b is a high-order structure protein. In the present second embodiment, the primary structure is dealt with, but the secondary structure and the tertiary structure may be targeted.

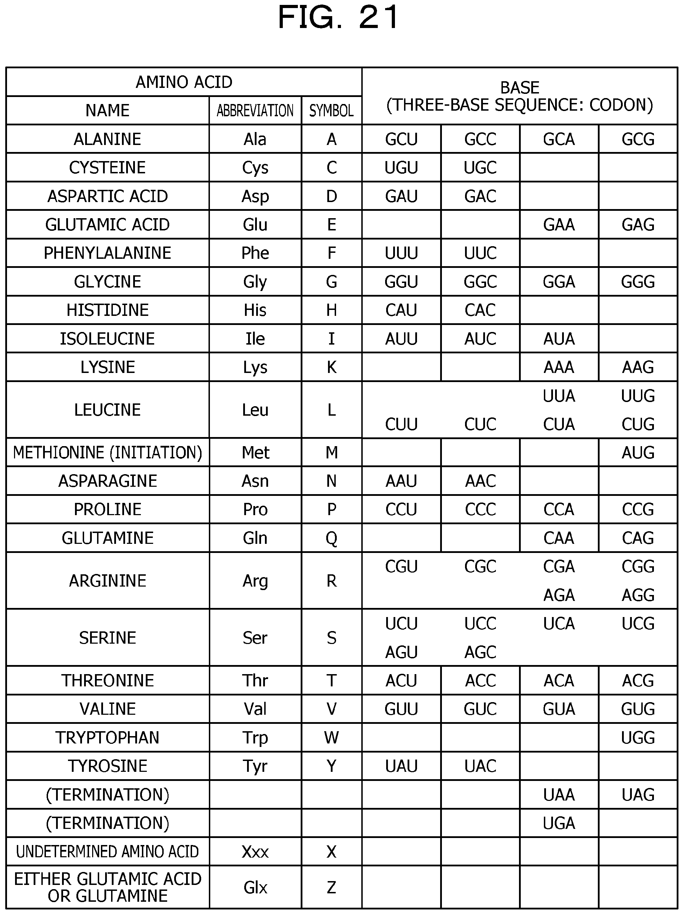

There are four types of bases in DNAs and RNAs, indicated by symbols of "A", "G", "C", and "T" or "U". Furthermore, a group of three base sequences determines each of 20 types of amino acids. Each amino acid is indicated by each of symbols of "A" to "Y". FIG. 21 is a diagram illustrating relationships between amino acids, bases, and codons. The group of three base sequences is referred to as a "codon". The sequence of the bases determines a codon, and an amino acid is determined when the codon is determined.

As illustrated in FIG. 21, a plurality of types of codons is associated with one amino acid. Thus, when the codon is determined, the amino acid is determined. However, even when the amino acid is determined, the codon is not uniquely specified. For example, an amino acid "alanine (Ala)" is associated with codons "GCU", "GCC", "GCA", or "GCG".

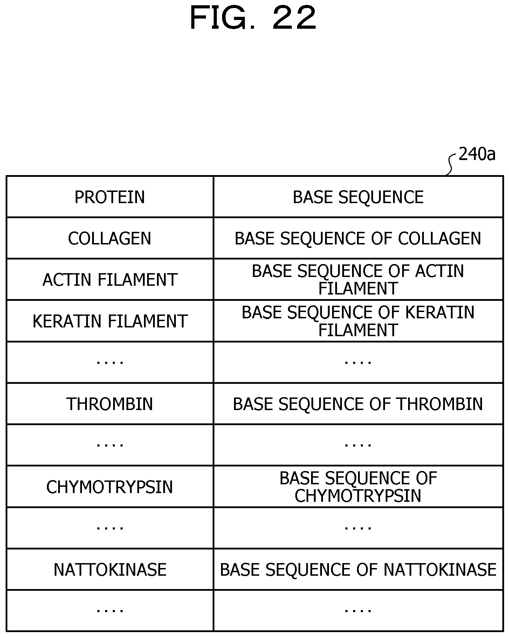

The protein dictionary 240a is information for associating a protein and a base sequence corresponding to the protein. The protein is uniquely determined by the base sequence. FIG. 22 is a diagram illustrating an example of a data structure of the protein dictionary according to the present second embodiment. As illustrated in FIG. 22, the protein dictionary 240a associates a protein and a base sequence. In the protein dictionary 240a of the present second embodiment, a case will be described where a protein and a base sequence are associated, but instead of the base sequence, a codon sequence or an amino acid sequence may be defined in association with the protein.

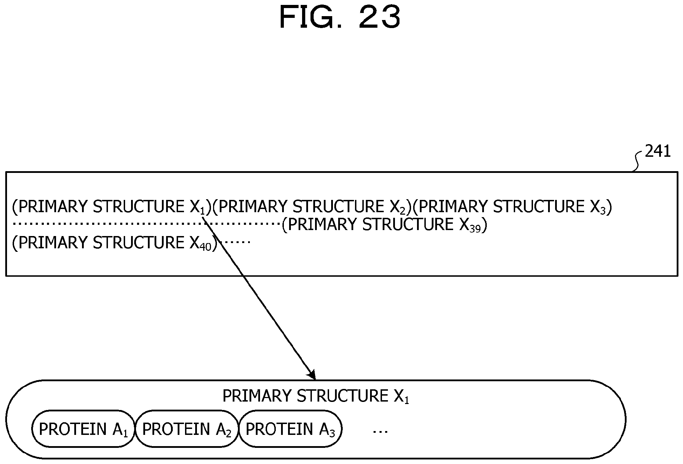

The primary structure data 241 is information including a plurality of primary structures including a plurality of proteins. FIG. 23 is a diagram illustrating an example of a data structure of the primary structure data of a protein according to the present second embodiment. As illustrated in FIG. 23, the primary structure data 241 of the protein includes a plurality of primary structures. Here, a primary structure includes a plurality of proteins, and each protein is set by a base sequence (or a codon sequence or an amino acid sequence). Each primary structure included in the primary structure data 241 includes a protein that may become cancerous or a protein that has become cancerous.

The similar protein information 242 is information that associates proteins having similar properties to the same concept number. A data structure of the similar protein information 242 corresponds to that described in FIG. 18.

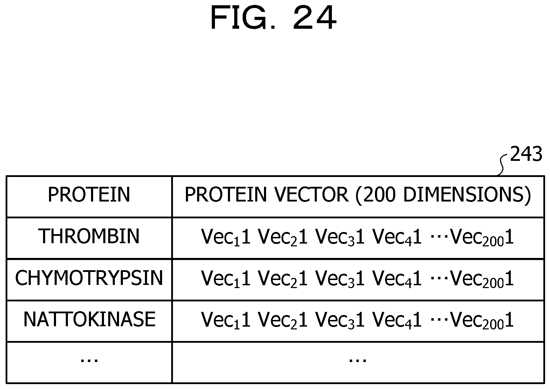

The protein vector table 243 is a table that retains information regarding a protein vector of each protein. FIG. 24 is a diagram illustrating an example of a data structure of the protein vector table according to the present second embodiment. As illustrated in FIG. 24, the protein vector table 243 associates a protein and a protein vector. Each protein vector is a protein vector calculated by embedding in the Poincare space, and is assumed to be, for example, a 200-dimensional vector.

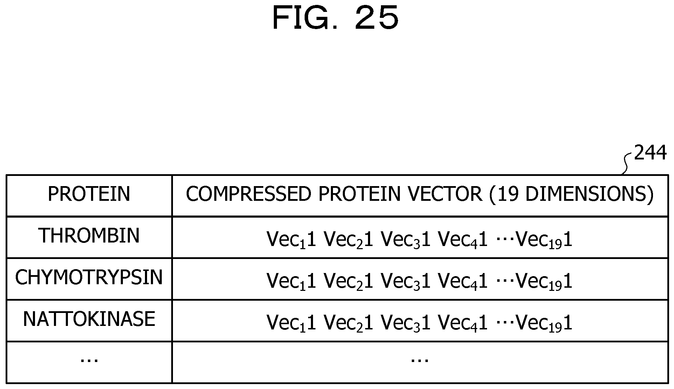

The compressed protein vector table 244 is a table that retains information regarding each protein vector obtained by dimension compression (compressed protein vector). FIG. 25 is a diagram illustrating an example of a data structure of the compressed protein vector table according to the present second embodiment. As illustrated in FIG. 25, the compressed protein vector table 244 associates a protein and a compressed protein vector. For example, a dimension of the compressed protein vector is assumed to be 19 dimensions, but the dimension is not limited to this.

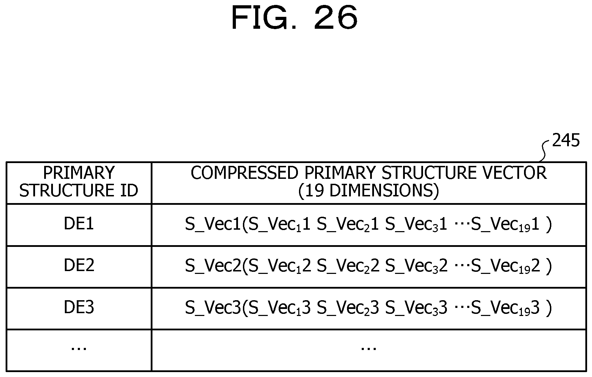

The compressed primary structure vector data 245 is a table that retains information regarding a compressed primary structure vector of each primary structure included in the primary structure data 241. FIG. 26 is a diagram illustrating an example of a data structure of the compressed primary structure vector data according to the present second embodiment. As illustrated in FIG. 26, the compressed primary structure vector data 245 associates a primary structure ID and a compressed primary structure vector. The primary structure ID is information that uniquely identifies a primary structure included in the primary structure data 241. The compressed primary structure vector is a compressed primary structure vector of a primary structure identified by the primary structure ID. For example, a compressed primary structure vector with a primary structure ID "DE1" is "S_Vecil S_Vec$_2$1 S_Vec$_3$1... S_Vec$_{19}$1". "S Vec$_1$1 S_Vec$_2$1 S_Vec$_3$1... S_Vec$_{19}$1" are collectively referred to as S_Vec1. The same applies to other compressed primary structure vectors.

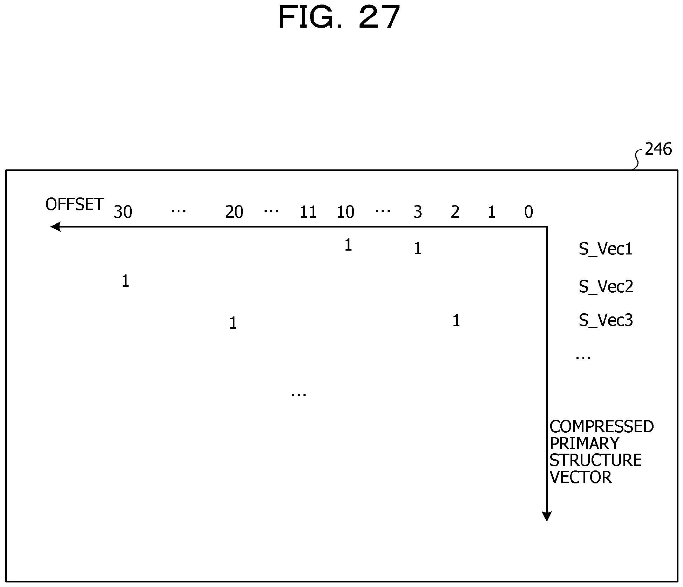

The inverted index 246 associates a compressed primary structure vector of a primary structure and a position (offset) on the primary structure data 241 of the primary structure corresponding to the compressed primary structure vector. For example, an offset of a first protein on the primary structure data 241 becomes "0", and an offset of an M-th protein from the beginning becomes "M-1". FIG. 27 is a diagram illustrating an example of a data structure of the inverted index according to the present second embodiment. In the inverted index 246 illustrated in FIG. 27, a horizontal axis indicates an offset on the primary structure data 241. A vertical axis corresponds to a compressed primary structure vector. For example, it is indicated that a first protein of a primary structure with a compressed primary structure vector "S_Vec1" is positioned at offsets "3" and "10" on the primary structure data 241.

The query data 247 is data of a primary structure specified in similarity search. In the present second embodiment, as an example, a primary structure included in the query data 247 is assumed to be one. The primary structure specified in the query data 247 includes a protein that may become cancerous or a protein that has become cancerous.

Return to the description of FIG. 19. The control unit 250 includes an acquisition unit 251, a protein vector calculation unit 252, a dimension compression unit 253, a primary structure vector calculation unit 254, and a similarity determination unit 255. The control unit 250 may be implemented by a CPU, an MPU, or the like. Furthermore, the control unit 250 may also be implemented by hard wired logic such as an ASIC or an FPGA.

The acquisition unit 251 is a processing unit that acquires various types of information from an external device or the input unit 220. For example, in a case where the protein dictionary 240a, the primary structure data 241, the similar protein information 242, the query data 247, and the like are received, the acquisition unit 251 stores, in the storage unit 240, the received protein dictionary 240a, primary structure data 241, similar protein information 242, query data 247, and the like.

The protein vector calculation unit 252 compares the protein dictionary 240a with the primary structure data 241 to extract a protein included in the primary structure data 241, regards the extracted protein as one word, and performs embedding in the Poincare space. The protein vector calculation unit 252 calculates a protein vector according to a position of the protein embedded in the Poincare space. In the case of embedding a protein in the Poincare space, the protein vector calculation unit 252 refers to the similar protein information 242 and embeds each protein corresponding to the same concept number at an approximate position.

For example, the protein vector calculation unit 252 embeds the protein "thrombin", the protein "chymotrypsin", and the protein "nattokinase" in an approximate position on the Poincare space, and calculates protein vectors according to the positions. The protein vector calculation unit 252 registers a protein and a protein vector in the protein vector table 243 in association with each other. The protein vector calculation unit 252 repeatedly executes the processing described above also for other proteins, to calculate protein vectors corresponding to the proteins and register the protein vectors in the protein vector table 243.

The dimension compression unit 253 is a processing unit that compresses a dimension of a protein vector stored in the protein vector table 243 to generate the compressed protein vector table 244. The processing in which the dimension compression unit 253 compresses the dimension of the protein vector is similar to the processing in which the dimension compression unit 153 of the first embodiment compresses the dimension of the word vector.

The primary structure vector calculation unit 254 is a processing unit that calculates a vector of each primary structure included in the primary structure data 241. The primary structure vector calculation unit 254 scans the primary structure data 241 from the beginning and extracts a primary structure. It is assumed that a delimiter of each primary structure included in the primary structure data 241 is set in advance.

The primary structure vector calculation unit 254 compares a primary structure with the protein dictionary 240a, and specifies each protein included in the primary structure. The primary structure vector calculation unit 254 compares the proteins included in the primary structure with the compressed protein vector table 244, and acquires a compressed protein vector of each protein included in the primary structure. The primary structure vector calculation unit 254 accumulates (sums up) the compressed protein vector of each protein included in the primary structure to calculate a compressed primary structure vector. The primary structure vector calculation unit 254 assigns a primary structure ID to the primary structure, and registers the primary structure ID and the compressed primary structure vector in the compressed primary structure vector data 245 in association with each other.

Furthermore, the primary structure vector calculation unit 254 refers to the inverted index 246, and sets a flag "1" at an intersection of an offset of the primary structure corresponding to the compressed primary structure vector and the compressed primary structure vector. For example, in a case where a primary structure of a compressed primary structure vector "S_Vec1" is positioned at offsets "3" and "10", the primary structure vector calculation unit 254 sets a flag "1" at an intersection of a column of the offset "3" and a row of the compressed primary structure vector "S_Vec1", and an intersection of a column of the offset "10" and the row of the compressed primary structure vector "S_Vec1".

The primary structure vector calculation unit 254 repeatedly executes the processing described above also for other primary structures included in the primary structure data 241, to execute registration of compressed primary structure vectors with respect to the compressed primary structure vector data 245 and setting of flags to the inverted index 246.

The similarity determination unit 255 is a processing unit that determines similarity between a vector of a first primary structure and a vector of a second primary structure. Here, as an example, it is assumed that the vector of the first primary structure is a compressed primary structure vector of a primary structure included in the query data 247. Description will be made assuming that the vector of the second primary structure is a compressed primary structure vector (compressed primary structure vector arranged on the vertical axis of the inverted index 246) of the compressed primary structure vector data 245, but the present invention is not limited to this.

The similarity determination unit 255 compares the primary structure included in the query data 247 with the protein dictionary 240a, and extracts proteins included in the primary structure included in the query data 247. The similarity determination unit 255 compares the proteins included in the primary structure with the compressed protein vector table 244, and acquires a compressed protein vector of each protein included in the primary structure. The similarity determination unit 255 accumulates (sums up) the compressed protein vector of each protein included in the primary structure to calculate a compressed primary structure vector.

In the following description, a compressed primary structure vector of the query data 247 is referred to as a "first compressed structure vector". A compressed primary structure vector (compressed primary structure vector arranged on the vertical axis of the inverted index 246) registered in the compressed primary structure vector data 245 is referred to as a "second compressed structure vector".

The similarity determination unit 255 calculates a degree of similarity between the first compressed structure vector and the second compressed structure vector on the basis of Formula (2) indicated in the first embodiment. For example, the closer a distance between the first compressed structure vector and the second compressed structure vector, the greater the degree of similarity.

The similarity determination unit 255 specifies the second compressed structure vector whose degree of similarity with the first compressed structure vector is equal to or greater than a threshold. In the following description, a second compressed structure vector whose degree of similarity with the first compressed structure vector is equal to or greater than a threshold is referred to as a "specific compressed structure vector".

The similarity determination unit 255 specifies an offset of a primary structure corresponding to the specific compressed structure vector on the basis of a flag of a row corresponding to the specific compressed structure vector among rows of the second compressed structure vectors of the inverted index 246. For example, in a case where the specific compressed structure vector is "S_Vec1", offsets "3" and "10" are specified.

The similarity determination unit 255 acquires a primary structure corresponding to the compressed word structure vector from the primary structure data 241 on the basis of the specified offset. The similarity determination unit 255 outputs the acquired primary structure as a primary structure similar to the primary structure specified in the query data 247 to the display unit 230 for display.

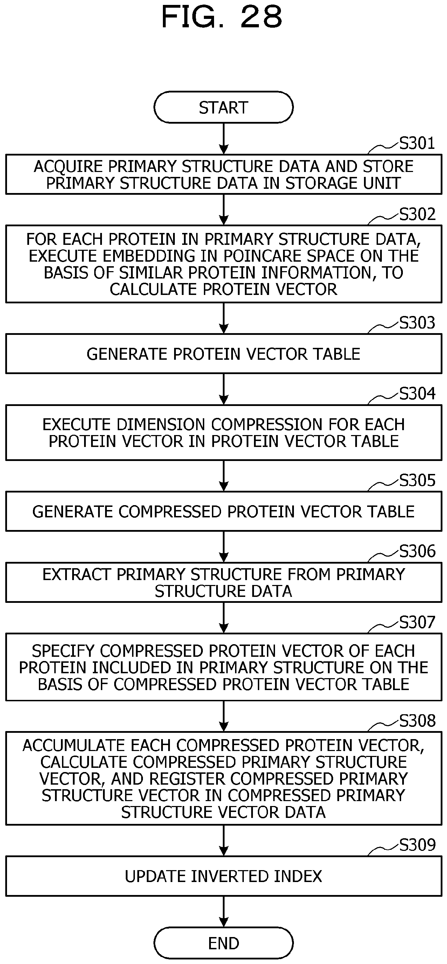

Next, an example of a processing procedure of the information processing apparatus 200 according to the present second embodiment will be described. FIG. 28 is a flowchart (1) illustrating the processing procedure of the information processing apparatus according to the present second embodiment. As illustrated in FIG. 28, the acquisition unit 251 of the information processing apparatus 200 acquires the primary structure data 241, and stores the primary structure data 241 in the storage unit 240 (Step S301).

For each protein in the primary structure data 241, the protein vector calculation unit 252 of the information processing apparatus 200 executes embedding in the Poincare space on the basis of the similar protein information 242, to calculate a protein vector (Step S302). The protein vector calculation unit 252 generates the protein vector table 243 (Step S303).

The dimension compression unit 253 of the information processing apparatus 200 executes dimension compression for each protein vector in the protein vector table 243 (Step S304). The dimension compression unit 253 generates the compressed protein vector table 244 (Step S305).

The primary structure vector calculation unit 254 of the information processing apparatus 200 extracts a primary structure from the primary structure data 241 (Step S306). The primary structure vector calculation unit 254 specifies a compressed protein vector of each protein included in the primary structure on the basis of the compressed protein vector table 244 (Step S307).

The primary structure vector calculation unit 254 accumulates each compressed protein vector, calculates a compressed primary structure vector, and registers the compressed primary structure vector in the compressed primary structure vector data 245 (Step S308). The primary structure vector calculation unit 254 generates the inverted index 246 on the basis of a relationship between an offset of the primary structure on the primary structure data 241 and the compressed primary structure vector (Step S309).

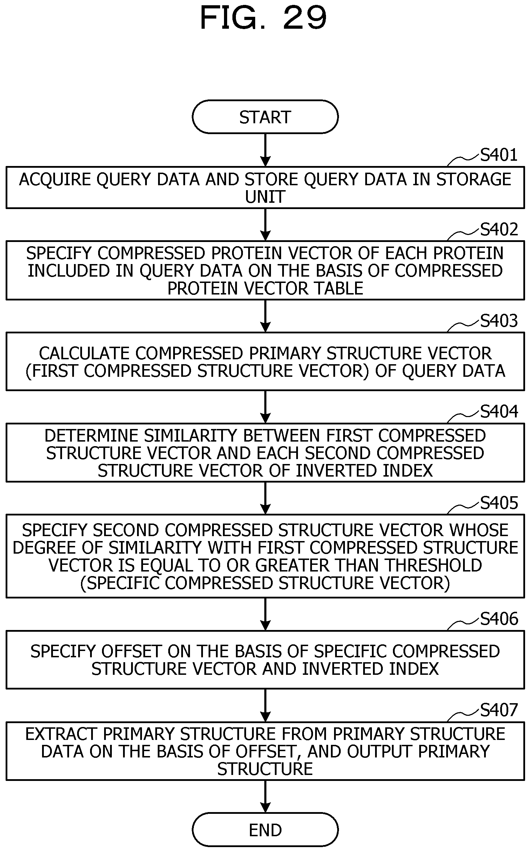

FIG. 29 is a flowchart (2) illustrating the processing procedure of the information processing apparatus according to the present second embodiment. As illustrated in FIG. 29, the acquisition unit 251 of the information processing apparatus 200 acquires the query data 247, and stores the query data 247 in the storage unit 240 (Step S401).

The similarity determination unit 255 of the information processing apparatus 200 specifies a compressed protein vector of each protein included in the query data 247 on the basis of the compressed protein vector table 244 (Step S402). The similarity determination unit 255 accumulates the compressed protein vector of each protein and calculates a compressed primary structure vector (first compressed structure vector) of the query data 247 (Step S403).

The similarity determination unit 255 determines similarity between the first compressed structure vector and each second compressed structure vector of the inverted index 246 (Step S404). The similarity determination unit 255 specifies a second compressed structure vector whose degree of similarity with the first compressed structure vector is equal to or greater than a threshold (specific compressed structure vector) (Step S405).

The similarity determination unit 155 specifies an offset on the basis of the specific compressed structure vector and the inverted index 246 (Step S406). The similarity determination unit 255 extracts a primary structure from the primary structure data 241 on the basis of the offset, and outputs the primary structure to the display unit 230 (Step S407).

Next, effects of the information processing apparatus 200 according to the present second embodiment will be described. The information processing apparatus 200 performs embedding in the Poincare space on the basis of the similar protein information 242, to calculate a protein vector and generate the protein vector table 243. With this configuration, it is possible to generate the protein vector table 243 in which approximate protein vectors are assigned to a plurality of proteins having similar properties. Thus, when vectors of primary structures are calculated by using the protein vector table 243, primary structures mutually having similar properties become similar vectors of the primary structures, and the vectors of the primary structures may be calculated accurately. Furthermore, in a case where similarity is determined by comparing a plurality of vectors of primary structures, since the vectors of the primary structures may be calculated accurately, similarity determination accuracy is improved.

Furthermore, the information processing apparatus generates the compressed protein vector table 244 obtained by compressing the dimension of the protein vector table 243, and calculates a vector of a primary structure by using compressed protein vectors. Thus, a calculation amount may be reduced as compared with a case where a vector of a primary structure is calculated and then dimension compression is performed.

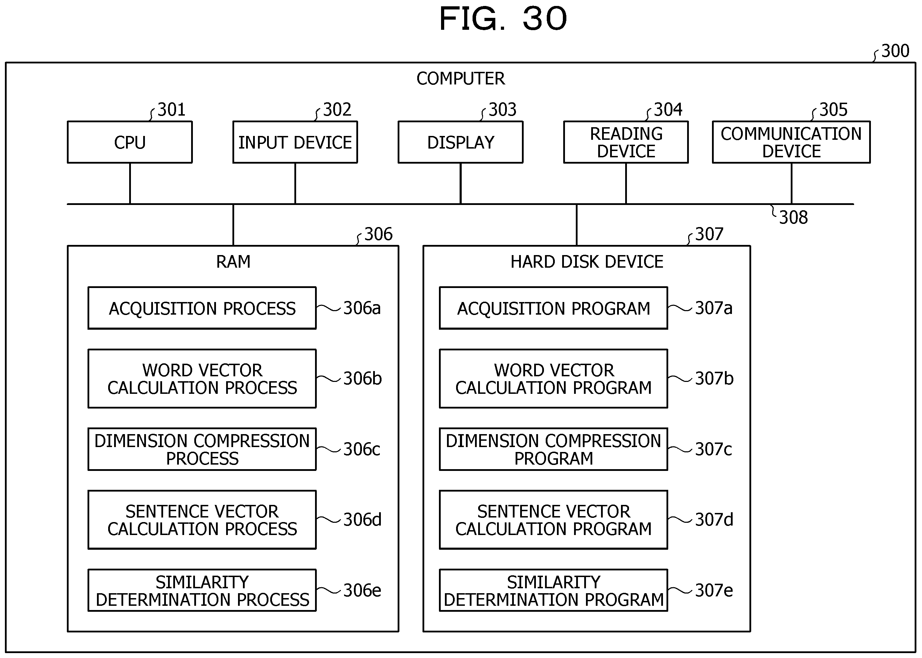

Next, an example of a hardware configuration of a computer that implements functions similar to those of the information processing apparatus 100 indicated in the embodiment described above will be described. FIG. 30 is a diagram illustrating an example of the hardware configuration of the computer that implements the functions similar to those of the information processing apparatus according to the first embodiment.

As illustrated in FIG. 30, a computer 300 includes a CPU 301 that executes various types of calculation processing, an input device 302 that receives input of data from a user, and a display 303. Furthermore, the computer 300 includes a reading device 304 that reads a program and the like from a storage medium, and a communication device 305 that exchanges data with an external device via a wired or wireless network. Furthermore, the computer 300 includes a RAM 306 that temporarily stores various types of information and a hard disk device 307. Additionally, each of the devices 301 to 307 is connected to a bus 308.

The hard disk device 307 includes an acquisition program 307a, a word vector calculation program 307b, a dimension compression program 307c, a sentence vector calculation program 307d, and a similarity determination program 307e. Furthermore, the CPU 301 reads each of the programs 307a to 307e, and develops each of the programs 307a to 307e to the RAM 306.

The acquisition program 307a functions as an acquisition process 306a. The word vector calculation program 307b functions as a word vector calculation process 306b. The dimension compression program 307c functions as a dimension compression process 306c. The sentence vector calculation program 307d functions as a sentence vector calculation process 306d. The similarity determination program 307e functions as a similarity determination process 306e.

Processing of the acquisition process 306a corresponds to the processing of the acquisition unit 151. Processing of the word vector calculation process 306b corresponds to the processing of the word vector calculation unit 152. Processing of the dimension compression process 306c corresponds to the processing of the dimension compression unit 153. Processing of the sentence vector calculation process 306d corresponds to the processing of the sentence vector calculation unit 154. Processing of the similarity determination process 306e corresponds to the processing of the similarity determination unit 155.

Note that each of the programs 307a to 307e do not necessarily have to be stored in the hard disk device 307 beforehand. For example, each of the programs is stored in a "portable physical medium" to be inserted in the computer 300, such as a flexible disk (FD), a CD-ROM, a DVD, a magneto-optical disk, or an IC card. Then, the computer 300 may read and execute each of the programs 307a to 307e.

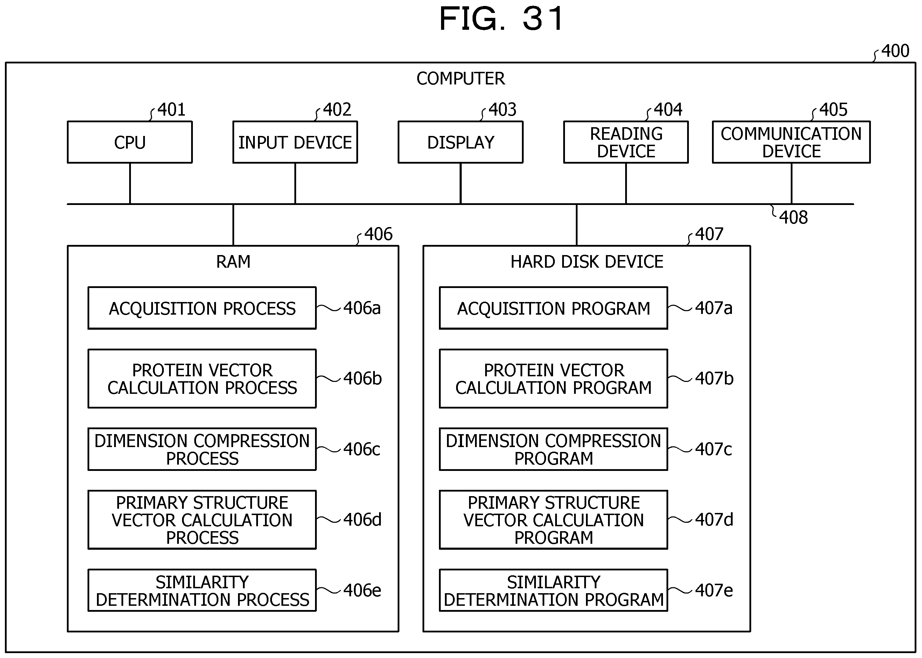

Next, an example of a hardware configuration of a computer that implements functions similar to those of the information processing apparatus 200 indicated in the embodiment described above will be described. FIG. 31 is a diagram illustrating an example of the hardware configuration of the computer that implements the functions similar to those of the information processing apparatus according to the second embodiment.

As illustrated in FIG. 31, a computer 400 includes a CPU 401 that executes various types of calculation processing, an input device 402 that receives input of data from a user, and a display 403. Furthermore, the computer 400 includes a reading device 404 that reads a program and the like from a storage medium, and a communication device 405 that exchanges data with an external device via a wired or wireless network. Furthermore, the computer 400 includes a RAM 406 that temporarily stores various types of information and a hard disk device 407. Additionally, each of the devices 401 to 407 is connected to a bus 408.

The hard disk device 407 includes an acquisition program 407a, a protein vector calculation program 407b, a dimension compression program 407c, a primary structure vector calculation program 407d, and a similarity determination program 407e. Furthermore, the CPU 401 reads each of the programs 407a to 407e, and develops each of the programs 407a to 407e to the RAM 406.

The acquisition program 407a functions as an acquisition process 406a. The protein vector calculation program 407b functions as a protein vector calculation process 406b. The dimension compression program 407c functions as a dimension compression process 406c. The primary structure vector calculation program 407d functions as a primary structure vector calculation process 406d. The similarity determination program 407e functions as a similarity determination process 406e.

Processing of the acquisition process 406a corresponds to the processing of the acquisition unit 251. Processing of the protein vector calculation process 406b corresponds to the processing of the protein vector calculation unit 252. Processing of the dimension compression process 406c corresponds to the processing of the dimension compression unit 253. Processing of the primary structure vector calculation process 406d corresponds to the processing of the primary structure vector calculation unit 254. Processing of the similarity determination process 406e corresponds to the processing of the similarity determination unit 255.

Note that each of the programs 407a to 407e do not necessarily have to be stored in the hard disk device 407 beforehand. For example, each of the programs is stored in a "portable physical medium" to be inserted in the computer 400, such as a flexible disk (FD), a CD-ROM, a DVD, a magneto-optical disk, or an IC card. Then, the computer 400 may read and execute each of the programs 407a to 407e.

REFERENCE SIGNS LIST

110, 210 Communication unit
120, 220 Input unit
130, 230 Display unit
140, 240 Storage unit
141 Text data
142 Similar vocabulary information
143 Word vector table

144 Compressed word vector table
145 Compressed sentence vector data
146, 246 Inverted index
147, 247 Query data
150, 250 Control unit
151, 251 Acquisition unit
152 Word vector calculation unit
153, 253 Dimension compression unit
154 Sentence vector calculation unit
155, 255 Similarity determination unit
240a Protein dictionary
241 Primary structure data
242 Similar protein information
243 Protein vector table
244 Compressed protein vector table
245 Compressed primary structure vector data
252 Protein vector calculation unit
254 Primary structure vector calculation unit

## Claims

1. An information processing program for causing a computer to execute processing of:

    embedding a plurality of vocabularies in a vector space on the basis of similar vocabulary information in which, for a plurality of different types of parts of speech, vocabularies that are synonymous or similar to a predetermined degree or more are associated;
    calculating, for each of a first sentence and a second sentence, a vector of the sentence on the basis of a vector in the vector space of each of a plurality of vocabularies included in the sentence; and
    determining similarity between the first sentence and the second sentence on the basis of the vector of the first sentence and the vector of the second sentence.

2. The information processing program according to claim 1, wherein processing of compressing a dimension of the vector in the vector space is further executed, and in the processing of calculating the vector of the sentence, the vector of the sentence is calculated on the basis of a vector obtained by compression of a dimension.

3. The information processing program according to claim 1, wherein, in the processing of embedding in the vector space, a plurality of vocabularies that is synonymous or similar to a predetermined degree or more is embedded at an approximate position in the vector space on the basis of the similar vocabulary information.

4. The information processing program according to claim 3, wherein the vector space is a Poincare space, and processing of assigning vectors of the vocabularies on the basis of the position of the vocabularies embedded in the Poincare space is further executed.

5. The information processing program according to claim 1, wherein processing of generating index information in which the vector of the second sentence and an offset that indicates a position of the second sentence in a text are associated, and extracting a second sentence that has similarity on the basis of a determination result of the similarity and the index information is further executed.

6. An information processing program for causing a computer to execute processing of:

    embedding a plurality of proteins that has different origins in a vector space on the basis of similar protein information in which, for the plurality of different origins related to the proteins, proteins that have similar properties are associated;
    calculating, for each of a first primary structure and a second primary structure, a vector of the primary structure on the basis of a vector in the vector space of each of a plurality of proteins included in the primary structure; and
    determining similarity between the first primary structure and the second primary structure on the basis of the vector of the first primary structure and the vector of the second primary structure.

7. The information processing program according to claim 6, wherein processing of compressing a dimension of the vector in the vector space is further executed, and in the processing of calculating the vector of the primary structure, the vector of the primary structure is calculated on the basis of a vector obtained by compression of a dimension.

8. The information processing program according to claim 7, wherein, in the processing of embedding in the vector space, a plurality of proteins that has similar properties is embedded at an approximate position in the vector space on the basis of the similar protein information.

9. The information processing program according to claim 8, wherein the vector space is a Poincare space, and processing of assigning vectors of the proteins on the basis of the position of the proteins embedded in the Poincare space is further executed.

10. The information processing program according to claim 6, wherein processing of generating index information in which the vector of the second primary structure and an offset that indicates a position of the second primary structure in data that includes a plurality of primary structures are associated, and extracting a second primary structure that has similarity on the basis of a determination result of the similarity and the index information is further executed.

11. An information processing method for causing a computer to execute processing of:

    embedding a plurality of vocabularies in a vector space on the basis of similar vocabulary information in which, for a plurality of different types of parts of speech, vocabularies that are synonymous or similar to a predetermined degree or more are associated;
    calculating, for each of a first sentence and a second sentence, a vector of the sentence on the basis of a vector in the vector space of each of a plurality of vocabularies included in the sentence; and
    determining similarity between the first sentence and the second sentence on the basis of the vector of the first sentence and the vector of the second sentence.

12. The information processing method according to claim 11, wherein processing of compressing a dimension of the vector in the vector space is further executed, and in the processing of calculating the vector of the sentence, the vector of the sentence is calculated on the basis of a vector obtained by compression of a dimension.

13. The information processing method according to claim 11, wherein, in the processing of embedding in the vector space, a plurality of vocabularies that is synonymous or similar to a predetermined degree or more is embedded at an approximate position in the vector space on the basis of the similar vocabulary information.

14. The information processing method according to claim 13, wherein the vector space is a Poincare space, and processing of assigning vectors of the vocabularies on the basis of the position of the vocabularies embedded in the Poincare space is further executed.

15. The information processing method according to claim 11, wherein processing of generating index information in which the vector of the second sentence and an offset that indicates a position of the second sentence in a text are associated, and extracting a second sentence that has similarity on the basis of a determination result of the similarity and the index information is further executed.

16. An information processing method for causing a computer to execute processing of:

    embedding a plurality of proteins that has different origins in a vector space on the basis of similar protein information in which, for the plurality of different origins related to the proteins, proteins that have similar properties are associated;
    calculating, for each of a first primary structure and a second primary structure, a vector of the primary structure on the basis of a vector in the vector space of each of a plurality of proteins included in the primary structure; and
    determining similarity between the first primary structure and the second primary structure on the basis of the vector of the first primary structure and the vector of the second primary structure.

17. The information processing method according to claim 16, wherein processing of compressing a dimension of the vector in the vector space is further executed, and in the processing of calculating the vector of the primary structure, the vector of the primary structure is calculated on the basis of a vector obtained by compression of a dimension.

18. The information processing program according to claim 17, wherein, in the processing of embedding in the vector space, a plurality of proteins that has similar properties is embedded at an approximate position in the vector space on the basis of the similar protein information.

19. The information processing method according to claim 18, wherein the vector space is a Poincare space, and processing of assigning vectors of the proteins on the basis of the position of the proteins embedded in the Poincare space is further executed.

20. The information processing method according to claim 16, wherein processing of generating index information in which the vector of the second primary structure and an offset that indicates a position of the second primary structure in data that includes a plurality of primary structures are associated, and extracting a second primary structure that has similarity on the basis of a determination result of the similarity and the index information is further executed.

21. An information processing apparatus comprising:

a word vector calculation unit that embeds a plurality of vocabularies in a vector space on the basis of similar vocabulary information in which, for a plurality of different types of parts of speech, vocabularies that are synonymous or similar to a predetermined degree or more are associated;
a sentence vector calculation unit that calculates, for each of a first sentence and a second sentence, a vector of the sentence on the basis of a vector in the vector space of each of a plurality of vocabularies included in the sentence; and
a similarity determination unit that determines similarity between the first sentence and the second sentence on the basis of the vector of the first sentence and the vector of the second sentence.

22. The information processing apparatus according to claim 21, wherein further comprising

a dimension compression unit that compresses a dimension of the vector in the vector space, wherein
the sentence vector calculation unit further that calculates the vector of the sentence on the basis of a vector obtained by compression of a dimension.

23. The information processing apparatus according to claim 21, wherein the word vector calculation unit further that embeds a plurality of vocabularies that is synonymous or similar to a predetermined degree or more at an approximate position in the vector space on the basis of the similar vocabulary information.

24. The information processing apparatus according to claim 23, wherein the vector space is a Poincare space, and the word vector calculation unit further that assigns vectors of the vocabularies on the basis of the position of the vocabularies embedded in the Poincare space.

25. The information processing apparatus according to claim 21, wherein the word vector calculation unit further that generates index information in which the vector of the second sentence and an offset that indicates a position of the second sentence in a text are associated, and
the similarity determination unit extracts a second sentence that has similarity on the basis of a determination result of the similarity and the index information.

26. An information processing apparatus comprising:

a protein vector calculation unit that embeds a plurality of proteins that has different origins in a vector space on the basis of similar protein information in which, for the plurality of different origins related to the proteins, proteins that have similar properties are associated;
a primary structure vector calculation unit that calculates, for each of a first primary structure and a second primary structure, a vector of the primary structure on the basis of a vector in the vector space of each of a plurality of proteins included in the primary structure; and
determining similarity between the first primary structure and the second primary structure on the basis of the vector of the first primary structure and the vector of the second primary structure.

27. The information processing apparatus according to claim 26, wherein further comprising

a dimension compression unit that compresses a dimension of the vector in the vector space, wherein

the primary structure vector calculation unit further that calculates the vector of the primary structure on the basis of a vector obtained by compression of a dimension.

28. The information processing apparatus according to claim 27, wherein,
the protein vector calculation unit further that embeds a plurality of proteins that has similar properties at an approximate position in the vector space on the basis of the similar protein information.

29. The information processing v according to claim 28, wherein
the vector space is a Poincare space, and
the protein vector calculation unit further that assigns vectors of the proteins on the basis of the position of the proteins embedded in the Poincare space.

30. The information processing apparatus according to claim 26, wherein
the protein vector calculation unit further that generates index information in which the vector of the second primary structure and an offset that indicates a position of the second primary structure in data that includes a plurality of primary structures are associated, and
the similarity determination unit extracts a second primary structure that has similarity on the basis of a determination result of the similarity and the index information.

# FIG. 1

TEXT DATA (10) → CALCULATE WORD VECTOR (Word2vec) → WORD VECTOR TABLE (11) → CALCULATE SENTENCE VECTOR → SENTENCE VECTOR DATA (12) → DIMENSION COMPRESSION → COMPRESSED SENTENCE VECTOR DATA (12A)

DIMENSION COMPRESSION → COMPRESSED WORD VECTOR TABLE (11A) → CALCULATE SENTENCE VECTOR → COMPRESSED SENTENCE VECTOR DATA (12B)

EP 4 080 379 A1

FIG. 2

# FIG. 3

| CONCEPT NUMBER | WORD | (PART OF SPEECH) |
|---|---|---|
| | DISLIKED | ADJECTIVE |
| | FAVORITE | NOUN |
| I101 | TREASURE | NOUN |
| | ... | ... |
| ... | | |

142

| CATEGORY | WORD | (PART OF SPEECH) |
|---|---|---|
| | TIGER | NOUN |
| | JAGUAR | NOUN |
| CARNIVOROUS ANIMAL | LION | NOUN |
| | ... | ... |
| ... | | |

5

# FIG. 4

p1

P

TREASURE FAVORITE LIKED

THESAURUS

REHABILITATION

PUBLIC WELFARE

PROOFREADING
JUSTICE

# FIG. 5

**100**

## INFORMATION PROCESSING APPARATUS

**150**
### CONTROL UNIT

**151**
ACQUISITION UNIT

**152**
WORD VECTOR CALCULATION UNIT

**153**
DIMENSION COMPRESSION UNIT

**154**
SENTENCE VECTOR CALCULATION UNIT

**155**
SIMILARITY DETERMINATION UNIT

**140**
### STORAGE UNIT

**141**
TEXT DATA

**142**
SIMILAR VOCABULARY INFORMATION

**143**
WORD VECTOR TABLE

**144**
COMPRESSED WORD VECTOR TABLE

**145**
COMPRESSED SENTENCE VECTOR DATA

**146**
INVERTED INDEX

**147**
QUERY DATA

**110**
COMMUNICATION UNIT

**120**
INPUT UNIT

**130**
DISPLAY UNIT

# FIG. 6

141

....... I LIKE APPLES. SO I DID A LOT OF RESEARCH ON APPLES. FOR EXAMPLE, APPLES ARE PRODUCED IN ..................... . FOR THIS REASON, APPLES ARE MY FAVORITE. .......... .

# FIG. 7

142

| CONCEPT NUMBER | WORD | (PART OF SPEECH) |
|---|---|---|
| I101 | LIKED | ADJECTIVE |
| | FAVORITE | NOUN |
| | TREASURE | NOUN |
| | ... | ... |
| I102 | DISLIKED | ADJECTIVE |
| | HATRED | NOUN |
| | DETEST | VERB |
| | ... | ... |
| ... | | |

# FIG. 8

143

| WORD | WORD VECTOR (200 DIMENSIONS) |
|---|---|
| LIKE | $Vec_1 1\ Vec_2 1\ Vec_3 1\ Vec_4 1 \cdots Vec_{200} 1$ |
| FAVORITE | $Vec_1 1\ Vec_2 1\ Vec_3 1\ Vec_4 1 \cdots Vec_{200} 1$ |
| TREASURE | $Vec_1 1\ Vec_2 1\ Vec_3 1\ Vec_4 1 \cdots Vec_{200} 1$ |
| ... | ... |
| DISLIKE | $Vec_1 2\ Vec_2 2\ Vec_3 2\ Vec_4 2 \cdots Vec_{200} 2$ |
| HATRED | $Vec_1 2\ Vec_2 2\ Vec_3 2\ Vec_4 2 \cdots Vec_{200} 2$ |
| DETEST | $Vec_1 2\ Vec_2 2\ Vec_3 2\ Vec_4 2 \cdots Vec_{200} 2$ |
| ... | ... |

# FIG. 9

144

| WORD | COMPRESSED WORD VECTOR (19 DIMENSIONS) |
|---|---|
| LIKE | $Vec_1 1 \ Vec_2 1 \ Vec_3 1 \ Vec_4 1 \ \cdots Vec_{19} 1$ |
| FAVORITE | $Vec_1 1 \ Vec_2 1 \ Vec_3 1 \ Vec_4 1 \ \cdots Vec_{19} 1$ |
| TREASURE | $Vec_1 1 \ Vec_2 1 \ Vec_3 1 \ Vec_4 1 \ \cdots Vec_{19} 1$ |
| ... | ... |
| DISLIKE | $Vec_1 2 \ Vec_2 2 \ Vec_3 2 \ Vec_4 2 \ \cdots Vec_{19} 2$ |
| HATRED | $Vec_1 2 \ Vec_2 2 \ Vec_3 2 \ Vec_4 2 \ \cdots Vec_{19} 2$ |
| DETEST | $Vec_1 2 \ Vec_2 2 \ Vec_3 2 \ Vec_4 2 \ \cdots Vec_{19} 2$ |
| ... | ... |

# FIG. 10

145

| SENTENCE ID | COMPRESSED SENTENCE VECTOR (19 DIMENSIONS) |
|---|---|
| SE1 | $S\_Vec1(S\_Vec_1 1\ S\_Vec_2 1\ S\_Vec_3 1\ \cdots S\_Vec_{19} 1\ )$ |
| SE2 | $S\_Vec2(S\_Vec_1 2\ S\_Vec_2 2\ S\_Vec_3 2\ \cdots S\_Vec_{19} 2\ )$ |
| SE3 | $S\_Vec3(S\_Vec_1 3\ S\_Vec_2 3\ S\_Vec_3 3\ \cdots S\_Vec_{19} 3\ )$ |
| ... | ... |

# FIG. 11

146

| OFFSET | 30 | ... | 20 | ... | 11 | 10 | ... | 3 | 2 | 1 | 0 | |
|---|---|---|---|---|---|---|---|---|---|---|---|---|
| | 1 | | | | | | | 1 | | | | S_Vec1 |
| | | | | | 1 | | | | | | | S_Vec2 |
| | | | 1 | | | | | | | | | S_Vec3 |
| | | | | | | | | | | | | ... |
| | | | ... | | | | | | | | | |

COMPRESSED
SENTENCE
VECTOR

# FIG. 12

# FIG. 13

# FIG. 14

START

ACQUIRE TEXT DATA AND STORE TEXT DATA IN STORAGE UNIT ~S101

FOR EACH WORD IN TEXT DATA, EXECUTE EMBEDDING IN POINCARE SPACE ON THE BASIS OF SIMILAR VOCABULARY INFORMATION, TO CALCULATE WORD VECTOR ~S102

GENERATE WORD VECTOR TABLE ~S103

EXECUTE DIMENSION COMPRESSION FOR EACH WORD VECTOR IN WORD VECTOR TABLE ~S104

GENERATE COMPRESSED WORD VECTOR TABLE ~S105

EXTRACT SENTENCE FROM TEXT DATA ~S106

SPECIFY COMPRESSED WORD VECTOR OF EACH WORD INCLUDED IN SENTENCE ON THE BASIS OF COMPRESSED WORD VECTOR TABLE ~S107

ACCUMULATE EACH COMPRESSED WORD VECTOR, CALCULATE COMPRESSED SENTENCE VECTOR, AND REGISTER COMPRESSED SENTENCE VECTOR IN COMPRESSED SENTENCE VECTOR DATA ~S108

UPDATE INVERTED INDEX ~S109

END

# FIG. 15

START

S201

ACQUIRE QUERY DATA AND STORE QUERY DATA IN STORAGE UNIT

S202

SPECIFY COMPRESSED WORD VECTOR OF EACH WORD INCLUDED IN SENTENCE OF QUERY DATA ON THE BASIS OF COMPRESSED WORD VECTOR TABLE

S203

CALCULATE COMPRESSED SENTENCE VECTOR (FIRST COMPRESSED SENTENCE VECTOR) OF QUERY DATA

S204

DETERMINE SIMILARITY BETWEEN FIRST COMPRESSED SENTENCE VECTOR AND EACH SECOND COMPRESSED SENTENCE VECTOR OF INVERTED INDEX

S205

SPECIFY SECOND COMPRESSED SENTENCE VECTOR WHOSE DEGREE OF SIMILARITY WITH FIRST COMPRESSED SENTENCE VECTOR IS EQUAL TO OR GREATER THAN THRESHOLD (SPECIFIC COMPRESSED SENTENCE VECTOR)

S206

SPECIFY OFFSET ON THE BASIS OF SPECIFIC COMPRESSED SENTENCE VECTOR AND INVERTED INDEX

S207

EXTRACT SENTENCE FROM TEXT DATA ON THE BASIS OF OFFSET, AND OUTPUT SENTENCE

END

# FIG. 16

142

| CONCEPT NUMBER | WORD | (PART OF SPEECH) | NOTE |
|---|---|---|---|
| I101 | LIKED | ADJECTIVE | |
| | FAVORITE | NOUN | |
| | TREASURE | NOUN | |
| | ... | ... | ... |
| I102 | DISLIKED | ADJECTIVE | |
| | HATRED | NOUN | |
| | DETEST | VERB | |
| | ... | ... | ... |
| ... | | | |
| I2001 | BRAZIL | NOUN | PLACE OF ORIGIN (COUNTRY) |
| | COLOMBIA | NOUN | PLACE OF ORIGIN (COUNTRY) |
| | KILIMANJARO | NOUN | PLACE OF ORIGIN (COUNTRY) |
| | ... | ... | ... |
| | ESPRESSO | NOUN | NAME OF DISH |
| | AMERICAN | NOUN | NAME OF DISH |
| | ... | ... | ... |
| ... | | | |

# FIG. 17

```
PRIMARY          CALCULATE VECTOR   PROTEIN VECTOR   DIMENSION      COMPRESSED PROTEIN   CALCULATE              COMPRESSED PRIMARY
STRUCTURE        (EMBED IN          TABLE            COMPRESSION    VECTOR TABLE         COMPRESSED PRIMARY     STRUCTURE VECTOR
DATA             POINCARE SPACE)    (200 DIMENSIONS)                (19 DIMENSIONS)      STRUCTURE VECTOR       DATA (19 DIMENSIONS)
(241)                               (243)                           (244)                                      (245)
                        +
                 SIMILAR PROTEIN
                 INFORMATION
                 (242)
```

# FIG. 18

242

| CONCEPT NUMBER | PROTEIN | ORIGIN | STEM |
|---|---|---|---|
| I101 | THROMBIN | BLOOD COAGULATION FACTOR | −COG |
| | CHYMOTRYPSIN | ENZYME | −ASE |
| | NATTOKINASE | ENZYME | −ASE |
| | ... | ... | ... |
| ... | | | |

# FIG. 19

```
200
┌─────────────────────────────────────────────────────────────┐
│              INFORMATION PROCESSING APPARATUS                 │
│                        250                      240           │
│            ┌───────────────────────┐ ┌───────────────────────┐│
│            │     CONTROL UNIT       │ │    STORAGE UNIT       ││
│   210      │          251          │ │          240a         ││
│ ┌────────┐ │ ┌───────────────────┐ │ │ ┌───────────────────┐ ││
│ │COMMUNIC│ │ │  ACQUISITION UNIT │ │ │ │     PROTEIN       │ ││
│ │ATION   ├─┤ └───────────────────┘ │ │ │   DICTIONARY      │ ││
│ │UNIT    │ │          252          │ │ └───────────────────┘ ││
│ └────────┘ │ ┌───────────────────┐ │ │          241          ││
│   220      │ │  PROTEIN VECTOR   │ │ │ ┌───────────────────┐ ││
│ ┌────────┐ │ │ CALCULATION UNIT  │ │ │ │    PRIMARY        │ ││
│ │INPUT   ├─┤ └───────────────────┘ │ │ │ STRUCTURE DATA    │ ││
│ │UNIT    │ │          253          │ │ └───────────────────┘ ││
│ └────────┘ │ ┌───────────────────┐ │ │          242          ││
│   230      │ │   DIMENSION       │ │ │ ┌───────────────────┐ ││
│ ┌────────┐ │ │ COMPRESSION UNIT  │ │ │ │ SIMILAR PROTEIN   │ ││
│ │DISPLAY ├─┤ └───────────────────┘ │ │ │  INFORMATION      │ ││
│ │UNIT    │ │          254          │ │ └───────────────────┘ ││
│ └────────┘ │ ┌───────────────────┐ │ │          243          ││
│            │ │   PRIMARY         │ │ │ ┌───────────────────┐ ││
│            │ │ STRUCTURE VECTOR  │ │ │ │ PROTEIN VECTOR    │ ││
│            │ │ CALCULATION UNIT  │ │ │ │     TABLE         │ ││
│            │ └───────────────────┘ │ │ └───────────────────┘ ││
│            │          255          │ │          244          ││
│            │ ┌───────────────────┐ │ │ ┌───────────────────┐ ││
│            │ │   SIMILARITY      │ │ │ │   COMPRESSED      │ ││
│            │ │ DETERMINATION     │ │ │ │ PROTEIN VECTOR    │ ││
│            │ │   UNIT            │ │ │ │     TABLE         │ ││
│            │ └───────────────────┘ │ │ └───────────────────┘ ││
│            │                       │ │          245          ││
│            │                       │ │ ┌───────────────────┐ ││
│            │                       │ │ │COMPRESSED PRIMARY │ ││
│            │                       │ │ │STRUCTURE VECTOR   │ ││
│            │                       │ │ │     DATA          │ ││
│            │                       │ │ └───────────────────┘ ││
│            │                       │ │          246          ││
│            │                       │ │ ┌───────────────────┐ ││
│            │                       │ │ │  INVERTED INDEX   │ ││
│            │                       │ │ └───────────────────┘ ││
│            │                       │ │          247          ││
│            │                       │ │ ┌───────────────────┐ ││
│            │                       │ │ │   QUERY DATA      │ ││
│            │                       │ │ └───────────────────┘ ││
│            └───────────────────────┘ └───────────────────────┘│
└─────────────────────────────────────────────────────────────┘
```

# FIG. 20

Phe
Leu
Ser
Cys

Amino group

NH₂

H — C — COOH

R

R group

Acidic carboxyl group

Amino Acid

1a

1b

# FIG. 21

| AMINO ACID | | | BASE (THREE-BASE SEQUENCE: CODON) | | | |
|---|---|---|---|---|---|---|
| NAME | ABBREVIATION | SYMBOL | | | | |
| ALANINE | Ala | A | GCU | GCC | GCA | GCG |
| CYSTEINE | Cys | C | UGU | UGC | | |
| ASPARTIC ACID | Asp | D | GAU | GAC | | |
| GLUTAMIC ACID | Glu | E | | | GAA | GAG |
| PHENYLALANINE | Phe | F | UUU | UUC | | |
| GLYCINE | Gly | G | GGU | GGC | GGA | GGG |
| HISTIDINE | His | H | CAU | CAC | | |
| ISOLEUCINE | Ile | I | AUU | AUC | AUA | |
| LYSINE | Lys | K | | | AAA | AAG |
| LEUCINE | Leu | L | | | UUA | UUG |
| | | | CUU | CUC | CUA | CUG |
| METHIONINE (INITIATION) | Met | M | | | | AUG |
| ASPARAGINE | Asn | N | AAU | AAC | | |
| PROLINE | Pro | P | CCU | CCC | CCA | CCG |
| GLUTAMINE | Gln | Q | | | CAA | CAG |
| ARGININE | Arg | R | CGU | CGC | CGA | CGG |
| | | | | | AGA | AGG |
| SERINE | Ser | S | UCU | UCC | UCA | UCG |
| | | | AGU | AGC | | |
| THREONINE | Thr | T | ACU | ACC | ACA | ACG |
| VALINE | Val | V | GUU | GUC | GUA | GUG |
| TRYPTOPHAN | Trp | W | | | | UGG |
| TYROSINE | Tyr | Y | UAU | UAC | | |
| (TERMINATION) | | | | | UAA | UAG |
| (TERMINATION) | | | | | UGA | |
| UNDETERMINED AMINO ACID | Xxx | X | | | | |
| EITHER GLUTAMIC ACID OR GLUTAMINE | Glx | Z | | | | |

# FIG. 22

240a

| PROTEIN | BASE SEQUENCE |
|---|---|
| COLLAGEN | BASE SEQUENCE OF COLLAGEN |
| ACTIN FILAMENT | BASE SEQUENCE OF ACTIN FILAMENT |
| KERATIN FILAMENT | BASE SEQUENCE OF KERATIN FILAMENT |
| . . . . | . . . . |
| THROMBIN | BASE SEQUENCE OF THROMBIN |
| . . . . | . . . . |
| CHYMOTRYPSIN | BASE SEQUENCE OF CHYMOTRYPSIN |
| . . . . | . . . . |
| NATTOKINASE | BASE SEQUENCE OF NATTOKINASE |
| . . . . | . . . . |

# FIG. 23

241

(PRIMARY STRUCTURE $X_1$)(PRIMARY STRUCTURE $X_2$)(PRIMARY STRUCTURE $X_3$) ·····················································(PRIMARY STRUCTURE $X_{39}$) (PRIMARY STRUCTURE $X_{40}$)·····

PRIMARY STRUCTURE $X_1$

PROTEIN $A_1$  PROTEIN $A_2$  PROTEIN $A_3$   ...

# FIG. 24

243

| PROTEIN | PROTEIN VECTOR (200 DIMENSIONS) |
|---|---|
| THROMBIN | $Vec_1 1\ Vec_2 1\ Vec_3 1\ Vec_4 1\ \cdots Vec_{200} 1$ |
| CHYMOTRYPSIN | $Vec_1 1\ Vec_2 1\ Vec_3 1\ Vec_4 1\ \cdots Vec_{200} 1$ |
| NATTOKINASE | $Vec_1 1\ Vec_2 1\ Vec_3 1\ Vec_4 1\ \cdots Vec_{200} 1$ |
| ... | ... |

# FIG. 25

244

| PROTEIN | COMPRESSED PROTEIN VECTOR (19 DIMENSIONS) |
|---|---|
| THROMBIN | $Vec_11\ Vec_21\ Vec_31\ Vec_41\ \cdots Vec_{19}1$ |
| CHYMOTRYPSIN | $Vec_11\ Vec_21\ Vec_31\ Vec_41\ \cdots Vec_{19}1$ |
| NATTOKINASE | $Vec_11\ Vec_21\ Vec_31\ Vec_41\ \cdots Vec_{19}1$ |
| ... | ... |

# FIG. 26

245

| PRIMARY STRUCTURE ID | COMPRESSED PRIMARY STRUCTURE VECTOR (19 DIMENSIONS) |
|---|---|
| DE1 | $S\_Vec1(S\_Vec_1 1\ S\_Vec_2 1\ S\_Vec_3 1\ \cdots S\_Vec_{19} 1\ )$ |
| DE2 | $S\_Vec2(S\_Vec_1 2\ S\_Vec_2 2\ S\_Vec_3 2\ \cdots S\_Vec_{19} 2\ )$ |
| DE3 | $S\_Vec3(S\_Vec_1 3\ S\_Vec_2 3\ S\_Vec_3 3\ \cdots S\_Vec_{19} 3\ )$ |
| ... | ... |

# FIG. 27

246

| OFFSET | 30 | ··· | 20 | ··· | 11 | 10 | ··· | 3 | 2 | 1 | 0 | |
|--------|----|-----|----|-----|----|----|-----|---|---|---|---|---|
|        |    |     |    |     |    | 1  |     | 1 |   |   |   | S_Vec1 |
|        | 1  |     |    |     |    |    |     |   |   |   |   | S_Vec2 |
|        |    |     | 1  |     |    |    |     | 1 |   |   |   | S_Vec3 |
|        |    |     |    |     |    |    |     |   |   |   |   | ... |

COMPRESSED
PRIMARY
STRUCTURE
VECTOR

# FIG. 28

```
              ┌─────────────┐
              │    START    │
              └──────┬──────┘
                     │            ╭─S301
    ┌────────────────▼──────────────────────┐
    │  ACQUIRE PRIMARY STRUCTURE DATA AND STORE │
    │  PRIMARY STRUCTURE DATA IN STORAGE UNIT   │
    └────────────────┬──────────────────────┘
                     │            ╭─S302
    ┌────────────────▼──────────────────────┐
    │  FOR EACH PROTEIN IN PRIMARY STRUCTURE DATA, │
    │  EXECUTE EMBEDDING IN POINCARE SPACE ON THE │
    │  BASIS OF SIMILAR PROTEIN INFORMATION, TO  │
    │  CALCULATE PROTEIN VECTOR                  │
    └────────────────┬──────────────────────┘
                     │            ╭─S303
    ┌────────────────▼──────────────────────┐
    │  GENERATE PROTEIN VECTOR TABLE            │
    └────────────────┬──────────────────────┘
                     │            ╭─S304
    ┌────────────────▼──────────────────────┐
    │  EXECUTE DIMENSION COMPRESSION FOR EACH   │
    │  PROTEIN VECTOR IN PROTEIN VECTOR TABLE   │
    └────────────────┬──────────────────────┘
                     │            ╭─S305
    ┌────────────────▼──────────────────────┐
    │  GENERATE COMPRESSED PROTEIN VECTOR TABLE │
    └────────────────┬──────────────────────┘
                     │            ╭─S306
    ┌────────────────▼──────────────────────┐
    │  EXTRACT PRIMARY STRUCTURE FROM PRIMARY   │
    │  STRUCTURE DATA                           │
    └────────────────┬──────────────────────┘
                     │            ╭─S307
    ┌────────────────▼──────────────────────┐
    │  SPECIFY COMPRESSED PROTEIN VECTOR OF EACH │
    │  PROTEIN INCLUDED IN PRIMARY STRUCTURE ON THE │
    │  BASIS OF COMPRESSED PROTEIN VECTOR TABLE │
    └────────────────┬──────────────────────┘
                     │            ╭─S308
    ┌────────────────▼──────────────────────┐
    │  ACCUMULATE EACH COMPRESSED PROTEIN VECTOR, │
    │  CALCULATE COMPRESSED PRIMARY STRUCTURE   │
    │  VECTOR, AND REGISTER COMPRESSED PRIMARY  │
    │  STRUCTURE VECTOR IN COMPRESSED PRIMARY   │
    │  STRUCTURE VECTOR DATA                    │
    └────────────────┬──────────────────────┘
                     │            ╭─S309
    ┌────────────────▼──────────────────────┐
    │  UPDATE INVERTED INDEX                    │
    └────────────────┬──────────────────────┘
                     │
              ┌──────▼──────┐
              │     END     │
              └─────────────┘
```

# FIG. 29

START

↓

ACQUIRE QUERY DATA AND STORE QUERY DATA IN STORAGE UNIT ～S401

↓

SPECIFY COMPRESSED PROTEIN VECTOR OF EACH PROTEIN INCLUDED IN QUERY DATA ON THE BASIS OF COMPRESSED PROTEIN VECTOR TABLE ～S402

↓

CALCULATE COMPRESSED PRIMARY STRUCTURE VECTOR (FIRST COMPRESSED STRUCTURE VECTOR) OF QUERY DATA ～S403

↓

DETERMINE SIMILARITY BETWEEN FIRST COMPRESSED STRUCTURE VECTOR AND EACH SECOND COMPRESSED STRUCTURE VECTOR OF INVERTED INDEX ～S404

↓

SPECIFY SECOND COMPRESSED STRUCTURE VECTOR WHOSE DEGREE OF SIMILARITY WITH FIRST COMPRESSED STRUCTURE VECTOR IS EQUAL TO OR GREATER THAN THRESHOLD (SPECIFIC COMPRESSED STRUCTURE VECTOR) ～S405

↓

SPECIFY OFFSET ON THE BASIS OF SPECIFIC COMPRESSED STRUCTURE VECTOR AND INVERTED INDEX ～S406

↓

EXTRACT PRIMARY STRUCTURE FROM PRIMARY STRUCTURE DATA ON THE BASIS OF OFFSET, AND OUTPUT PRIMARY STRUCTURE ～S407

↓

END

# FIG. 30

# FIG. 31

COMPUTER 400

| 401 CPU | 402 INPUT DEVICE | 403 DISPLAY | 404 READING DEVICE | 405 COMMUNICATION DEVICE |

408

**RAM** 406

- ACQUISITION PROCESS — 406a
- PROTEIN VECTOR CALCULATION PROCESS — 406b
- DIMENSION COMPRESSION PROCESS — 406c
- PRIMARY STRUCTURE VECTOR CALCULATION PROCESS — 406d
- SIMILARITY DETERMINATION PROCESS — 406e

**HARD DISK DEVICE** 407

- ACQUISITION PROGRAM — 407a
- PROTEIN VECTOR CALCULATION PROGRAM — 407b
- DIMENSION COMPRESSION PROGRAM — 407c
- PRIMARY STRUCTURE VECTOR CALCULATION PROGRAM — 407d
- SIMILARITY DETERMINATION PROGRAM — 407e

EP 4 080 379 A1

# FIG. 32

**INTERNATIONAL SEARCH REPORT**

International application No.

PCT/JP2019/049967

A. CLASSIFICATION OF SUBJECT MATTER
Int.Cl. G06F16/31(2019.01)i, G06F16/383(2019.01)i, G06F16/901(2019.01)i,
G06F16/908(2019.01)i
FI: G06F16/31, G06F16/383, G06F16/901, G06F16/908
According to International Patent Classification (IPC) or to both national classification and IPC

B. FIELDS SEARCHED

Minimum documentation searched (classification system followed by classification symbols)
Int.Cl. G06F16/31, G06F16/383, G06F16/901, G06F16/908

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2019-204362 A (Z HOLDINGS CORP.) 28.11.2019 (2019-11-28), paragraphs [0023]-[0039], [0042] | 1, 11, 21 |
| Y | | 2-5, 12-15, 22-25 |
| Y | JP 2005-182696 A (FUJI XEROX CO., LTD.) 07.07.2005 (2005-07-07), paragraphs [0024], [0048]-[0057] | 2, 12, 22 |
| Y | JP 2019-525272 A (ROVI GUIDES INC.) 05.09.2019 (2019-09-05), paragraph [0003] | 3-4, 13-14, 23-24 |
| Y | JP 2018-45537 A (FUJITSU LIMITED) 22.03.2018 (2018-03-22), paragraphs [0081]-[0116] | 5, 15, 25 |

☐  Further documents are listed in the continuation of Box C.        ☒  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27.02.2020 | Date of mailing of the international search report<br>17.03.2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

## INTERNATIONAL SEARCH REPORT

International application No.

PCT/JP2019/049967

**Box No. II      Observations where certain claims were found unsearchable (Continuation of item 2 of first sheet)**

This international search report has not been established in respect of certain claims under Article 17 (2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

```
Document 1: JP 2019-204362 A (Z HOLDINGS CORP.) 28.11.2019 (2019-11-28),
paragraphs [0023]-[0039], [0042]
(Family: none)

Document 2: JP 2005-182696 A (FUJI XEROX CO., LTD.) 07.07.2005 (2005-07-07),
paragraphs [0024], [0048]-[0057]
(Family: none)

Document 3: JP 2019-525272 A (ROVI GUIDES INC.) 05.09.2019 (2019-09-05),
paragraph [0003]
& WO 2017-223035 A1, paragraph [0003]

Document 4: JP 2018-45537 A (FUJITSU LIMITED) 22.03.2018 (2018-03-22),
paragraphs [0081]-[0116]
& US 2018/0075017 A1, paragraphs [0112]-[0152]
```

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-5, 11-15, 21-25

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

| INTERNATIONAL SEARCH REPORT | International application No. |
|---|---|
| | PCT/JP2019/049967 |

The claims are classified into the two inventions below.

(Invention 1) Claims 1-5, 11-15, and 21-25

Document 1 (refer to paragraphs [0023]-[0039] and [0042]) indicates as follows: "distributed representations (equivalent to the "vector of a sentence" in the present invention) of sentences are generated by embedding multiple words included in each sentence into a Poincare space, and the similarity between the sentences is determined on the basis of the distance on the Poincare space; and when distributed presentation of a sentence is generated, distributed representation of the sentence may be generated on the basis of the concept (equivalent to the "part of speech" in the present invention) of each word". In light of document 1, claim 1 lacks novelty, and thus does not have a special technical feature.

However, claim 2 that depends from claim 1 has the special technical feature of "a process for calculating the vector of a sentence by further executing a process for compressing the dimensions of the vector in the vector space, wherein the vector of the sentence is calculated on the basis of the vector subjected to the dimension compression". Accordingly claims 1-2 are classified as invention 1.

In addition, claims 3-5 depend from claim 1 and have a link of invention to claim 1, and thus are identified as invention 1.

Furthermore, claims 11-15 and 21-25 are respectively substantially identical to or similarly closely related to claims 1-5, and thus are identified as invention 1.

(Invention 2) Claims 6-10, 16-20, and 26-30

Claims 6-10, 16-20, and 26-30 cannot be said to have the same or corresponding special technical features between these claims and claim 2 classified as invention 1.

In addition, claims 6-10, 16-20, and 26-30 do not depend from claim 1. Furthermore, claims 6-10, 16-20, and 26-30 are not substantially identical to or similarly closely related to any of the claims classified as invention 1.

Accordingly claims 6-10, 16-20, and 26-30 cannot be identified as invention 1.

Meanwhile, claims 6-10, 16-20, and 26-30 have the special technical feature of: "for multiple different origins about proteins, embedding the multiple proteins having different origins are embedded into a vector space on the basis of analogous protein information in which proteins having analogous characteristics are associated with one another; for each of a first primary structure and a second primary structure, calculating a vector of the primary structure on the basis of a vector of each of the multiple proteins included in the primary structure as indicated on the vector space; and determining the analogy between the first and second primary structures on the basis of the vector of the first primary structure and the vector of the second primary structure"; thus these claims are classified as invention 2.

Form PCT/ISA/210 (continuation of first sheet) (January 2015)

**INTERNATIONAL SEARCH REPORT**
Information on patent family members

International application No.

PCT/JP2019/049967

```
JP 2019-204362 A   28.11.2019   (Family: none)

JP 2005-182696 A   07.07.2005   (Family: none)

JP 2019-525272 A   05.09.2019   WO 2017-223035 A1
                                paragraph [0003]

JP 2018-45537 A    22.03.2018   US 2018/0075017 A1
                                paragraphs [0112]-[0152]
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VALENTIN KHRULKOV et al.** Hyperbolic Image Embeddings. Cornell University, 03 April 2019